# EUROPÄISCHE PATENTSCHRIFT

(11) **EP 2 719 561 B1**
(45) Veröffentlichungstag und Bekanntmachung des Hinweises auf die Patenterteilung: **31.07.2019**
(21) Anmeldenummer: 12007083.4
(22) Anmeldetag: 12.10.2012
(51) Int. Cl.: B60H 1/34

(54) **Kanalkörper sowie Innenverkleidungsteil mit einem solchen Kanalkörper**
Channel body and interior trim part with such channel body
Corps de conduit et élément d'habillage intérieur avec un tel corps de conduit

(43) Veröffentlichungstag der Anmeldung: 16.04.2014
(73) Patentinhaber: Faurecia Innenraum Systeme GmbH, 76767 Hagenbach (DE)
(72) Erfinder: Desailly, Philippe, 62740 Oberhoffen sur Moder (DE)
(74) Vertreter: Schatt, Markus F.

(56) Entgegenhaltungen:
- EP-A1- 1 602 517
- DE-A1- 2 340 749
- DE-A1-102007 019 394
- US-A- 5 741 179

## Beschreibung

Die Erfindung betrifft einen Kanalkörper zur Belüftung eines Innenraums eines Fahrzeugs.

Aus der EP 1 602 517 A1, der DE 10 2007 019 394 A1 und der US 5,741,179 A ist jeweils ein solcher Kanalkörper bekannt.

Die DE 23 40 749 A1 beschreibt eine in einer Armaturentafel eines Kraftfahrzeugs vorgesehene Entfrosterdüse für die Frontscheibe. Diese bekannte Entfrosterdüse hat an ihrem unteren Ende einen kreisförmigen Rohranschlussteil, an ihrem oberen, ausströmseitigen Ende einen sehr langen und schmalen Ausströmschlitz und dazwischen einen Strömungskanal, wobei sich der Durchströmquerschnitt von dem Rohranschlussteil bis zum Ausströmschlitz kontinuierlich verändert. Der Ausströmschlitz ist von einem Flansch umgeben, der seitlich Öffnungen zur Aufnahme von Befestigungsschrauben besitzt. Die Entfrosterdüse besteht aus zwei Teilen, die durch Kleben oder Schweißen miteinander verbunden sind. An dem der Frontscheibe nahen Teil ist der Flansch einstückig angeformt.

Diese Druckschrift beschreibt außerdem eine Armaturentafel für ein Kraftfahrzeug, die diese bekannte Entfrosterdüse für die Frontscheibe und ein Blech aufweist, das für den Durchgang der Entfrosterdüse eine Ausnehmung oder Durchbrechung besitzt. Das obere Ende der Entfrosterdüse ist in der Ebene der Oberfläche der Armaturentafel und im Bereich der Ausnehmung angeordnet. Mittels Blechschrauben erfolgt die Befestigung der Entfrosterdüse am Blech, die durch das Blech hindurchgehen und sich in die Öffnungen im Flansch einschneiden.

Bei dieser bekannten Armaturentafel ist im Flansch der Entfrosterdüse eine um die Ausnehmung herum und im geringen Abstand zu dieser verlaufende Nut angeordnet, die nach oben offen ist, und ist der Rand der Ausnehmung als Bördelkante ausgebildet, die nach unten gebogen ist. Die Bördelkante greift mit Spiel von oben her in die Nut ein. Das obere Ende der Entfrosterdüse wird dadurch quer zur Ausströmrichtung, insbesondere über die ganze Länge so fixiert beziehungsweise festgelegt, dass eine Verengung des Querschnitts des Ausströmschlitzes nicht stattfinden kann. Nachteilig ist dabei, dass wegen des Flansches mit der Nut die Größe der Entfrosterdüse an ihrem oberen Ende und der Platzbedarf für den Einbau der Entfrosterdüse in die Ausnehmung der Armaturentafel ziemlich hoch sind.

Es ist Aufgabe der Erfindung, einen Kanalkörper bereitzustellen, dessen Mündungsöffnung zum Einsaugen von Luft aus einem Innenraum eines Fahrzeugs oder zum Ausblasen von Luft in einen Innenraum eines Fahrzeugs die Größe an ihrem oberen Ende in ihrer Breite verringert werden kann. Dadurch soll bei einem Innenverkleidungsteil für ein Fahrzeug der Platzbedarf für die Ausbildung eines Öffnungsbereichs des Kanalkörpers zum Einsaugen von Luft aus einem Innenraum des Fahrzeugs oder zum Ausblasen von Luft in einen Innenraum des Fahrzeugs zu verringert werden.

Diese Aufgabe wird durch den Gegenstand des Anspruchs 1 gelöst. Weitere Ausführungsformen sind in den auf diese rückbezogenen Unteransprüchen beschrieben.

Nach der erfindungsgemäßen Lösung ist eine Belüftungsvorrichtung, also eine Einlass- und Auslassvorrichtung oder Luftleitvorrichtung zur Belüftung eines Innenraums eines Fahrzeugs, also zum Einsaugen von Luft aus einem Innenraum eines Fahrzeugs oder zum Ausblasen von Luft in einen Innenraum eines Fahrzeugs vorgesehen. Die Belüftungsvorrichtung weist insbesondere auf:
einen Mündungsabschnitt, aufweisend einen ersten Wandungsabschnitt mit einem ersten Oberflächenabschnitt und einen zweiten Wandungsabschnitt mit einem zweiten Oberflächenabschnitt, der dem ersten Oberflächenabschnitt gegenüber liegt, so dass die Oberflächenabschnitte einen Öffnungsbereich ausbilden, der beim bestimmungsgemäßen Einbau der Belüftungsvorrichtung in das Fahrzeug in den Innenraum mündet;
wenigstens ein Distanzstück, der mit jeweils einem ersten Endabschnitt an einem der Wandungsabschnitte und einem zweiten Endabschnitt an dem jeweils anderen der Wandungsabschnitte gekoppelt ist und der einen zwischen den beiden Endabschnitten gelegenen Mittelabschnitt aufweist, um einen durch die Länge des Distanzstück bestimmten Mindestabstand zwischen den einander gegenüber liegenden Oberflächenabschnitten einzurichten.

Nach einer Ausführungsform der Belüftungsvorrichtung ist vorgesehen, dass sich an den ersten Wandungsabschnitt eine quer zu dieser erstreckende Stirnwand anschließt, die ein sich flächig erstreckendes Trägerteil eines Innenverkleidungsteils ist.

Nach einer Ausführungsform der Belüftungsvorrichtung ist vorgesehen, dass:
der erste oder zweite Wandungsabschnitt wenigstens eine Ausnehmung aufweist mit: einer Lageröffnung, die in dem zweiten Oberflächenabschnitt ausgebildet ist, einer ersten Anlagefläche, die zu dem ersten Oberflächenabschnitt hin weist, und einer zweiten Anlagefläche aufweist, die zu der ersten Anlagefläche hin weist;
bei wenigstens einem der Distanzstücke der zweite Endabschnitt als freies Ende ausgebildet ist und eine erste Stirnfläche, die von dem ersten Oberflächenabschnitt weg weist, und eine zweite Stirnfläche aufweist, die von der ersten Stirnfläche weg weist;
das Distanzstück durch die Lageröffnung ragt und mit dem zweiten Endabschnitt derart in der Ausnehmung sitzt, dass die erste Stirnfläche an der ersten Anlagefläche und die zweite Stirnfläche an der zweiten Anlagefläche anliegt.

Die Belüftungsvorrichtung weist insbesondere auf:
den ersten Wandungsabschnitt mit einem ersten Oberflächenabschnitt;
den zweiten Wandungsabschnitt mit einem zweiten Oberflächenabschnitt, der zu dem ersten Oberflächenabschnitt hin weist;
das wenigstens eine Distanzstück mit einem ersten Endabschnitt, einem zweiten Endabschnitt und einem Mittelabschnitt, der zwischen den beiden Endabschnitten liegt;
wobei:
   die Oberflächenabschnitte zusammen einen Öffnungsbereich der Vorrichtung bilden;
   der Öffnungsbereich einen Mündungsabschnitt hat, die beim bestimmungsgemäßen Einbau der Vorrichtung in das Fahrzeug in den Innenraum mündet;
   der erste Endabschnitt an den ersten Oberflächenabschnitt und der zweite Endabschnitt an den zweiten Oberflächenabschnitt gekoppelt ist;
   der Mittelabschnitt einen Abstand zwischen den Oberflächenabschnitten überbrückt.

Eine Belüftungsvorrichtung zum Einsaugen von Luft aus einem Innenraum eines Fahrzeugs oder zum Ausblasen von Luft in einen Innenraum eines Fahrzeugs wird hier auch als Luftleitvorrichtung für ein Fahrzeug bezeichnet. Die vorgeschlagene Luftleitvorrichtung kann beispielsweise eine Entfrosterdüse für die Frontscheibe eines Kraftfahrzeugs sein.

Da bei der vorgeschlagenen Luftleitvorrichtung das Distanzstück mit seinen Endabschnitten an die Oberflächenabschnitte gekoppelt ist, kann eine unerwünschte Veränderung des Querschnitts des Öffnungsbereichs verhindert oder eingeschränkt werden, die durch eine Verformung der Wandungsabschnitte beispielsweise aufgrund von Wärmeeinwirkung beim Durchströmen von warmer oder kühler Luft und/oder von mechanischer Belastung beim Einbau der Luftleitvorrichtung in ein Innenverkleidungsteil des Fahrzeugs hervorgerufen wird. Somit kann ein den Mündungsabschnitt umgebender Flansch, wie er bei der aus der DE 23 40 749 A1 bekannten Entfrosterdüse vorgesehen ist, entfallen, sodass an dem Öffnungsbereich der vorgeschlagenen Luftleitvorrichtung eine Größe möglich ist, die kleiner als die Größe am ausströmseitigen Ende dieser bekannten Entfrosterdüse ist.

Die Kopplung eines der Endabschnitte an den jeweils zugeordneten Oberflächenabschnitt kann nach Bedarf auf beliebige Art und Weise ausgebildet sein und beispielsweise eine lösbare oder unlösbare und/oder eine formschlüssige und/oder kraftschlüssige und/oder stoffschlüssige Befestigung oder Verbindung sein und/oder durch Kleben und/oder Schweißen und/oder einstückiges Urformen hergestellt sein.

Der zweite Wandungsabschnitt ist derart an den ersten Wandungsabschnitt gekoppelt, dass die Oberflächenabschnitte zusammen den Öffnungsbereich bilden. Die Kopplung des zweiten Wandungsabschnitts an den ersten Wandungsabschnitt kann nach Bedarf auf beliebige Art und Weise ausgebildet sein und beispielsweise eine lösbare oder unlösbare und/oder eine formschlüssige und/oder kraftschlüssige Befestigung oder Verbindung sein und/oder durch Kleben und/oder Schweißen hergestellt sein.

Es kann vorgesehen sein, dass der erste Endabschnitt in einem an den Mündungsabschnitt grenzenden Randbereich des ersten Oberflächenabschnitts und der zweite Endabschnitt in einem an den Mündungsabschnitt grenzenden Randbereich des zweiten Oberflächenabschnitts liegt.

Hierdurch kann die Form des Mündungsabschnitts besonders gut stabilisiert werden.

Es kann vorgesehen sein, dass:
wenigstens eine Ausnehmung in dem zweiten Wandungsabschnitt ausgebildet ist, die die wenigstens eine Lageröffnung, die in dem zweiten Oberflächenabschnitt ausgebildet ist, eine erste Anlagefläche, die zu dem ersten Oberflächenabschnitt hin weist, und eine zweite Anlagefläche, die zu der ersten Anlagefläche hin weist, aufweist;
bei wenigstens einem der Distanzstücke der zweite Endabschnitt als freies Ende ausgebildet ist und eine erste Stirnfläche, die von dem ersten Oberflächenabschnitt weg weist, und eine zweite Stirnfläche aufweist, die von der ersten Stirnfläche weg weist;
das Distanzstück durch die Lageröffnung ragt und mit dem zweiten Endabschnitt derart in der Ausnehmung sitzt, dass die erste Stirnfläche an der ersten Anlagefläche und die zweite Stirnfläche an der zweiten Anlagefläche anliegt.

Hierdurch wird eine lösbare, formschlüssige Kopplung zwischen dem zweiten Wandungsabschnitt und dem zweiten Endabschnitt erzielt.

Alternativ oder zusätzlich kann vorgesehen sein, dass:
wenigstens eine Ausnehmung in dem ersten Wandungsabschnitt ausgebildet ist, die die wenigstens eine Lageröffnung, die in dem ersten Oberflächenabschnitt ausgebildet ist, eine erste Anlagefläche, die zu dem zweiten Oberflächenabschnitt hin weist, und eine zweite Anlagefläche, die zu der ersten Anlagefläche hin weist, aufweist;
bei wenigstens einem der Distanzstücke der erste Endabschnitt als freies Ende ausgebildet ist und eine erste Stirnfläche, die von dem zweiten Oberflächenabschnitt weg weist, und eine zweite Stirnfläche aufweist, die von der ersten Stirnfläche weg weist;
das Distanzstück durch die Lageröffnung ragt und mit dem ersten Endabschnitt derart in der Ausnehmung sitzt, dass die erste Stirnfläche an der ersten Anlagefläche und die zweite Stirnfläche an der zweiten Anlagefläche anliegt.

Es kann vorgesehen sein, dass:
wenigstens eines der Distanzstücke wenigstens einen Längsschenkel, der an einem Ende an den ersten oder zweiten Oberflächenabschnitt gekoppelt ist, und wenigstens einen Querschenkel aufweist, der von dem anderen Ende des Längsschenkels quer absteht;
die Stirnflächen an dem Querschenkel ausgebildet sind.

Bevorzugt bilden Längsschenkel und Querschenkel zusammen eine L-förmige oder T-förmige oder pilzförmige oder pfeilförmige Struktur.

Es kann vorgesehen sein, dass:
wenigstens einer der Querschenkel auf seiner zu der ersten Anlagefläche weisenden Seite wenigstens eine Erhebung aufweist, an der die erste Stirnfläche ausgebildet ist; und/oder
wenigstens einer der Querschenkel auf seiner zu der zweiten Anlagefläche weisenden Seite wenigstens eine Erhebung aufweist, an der die zweite Stirnfläche ausgebildet ist.

Diese Erhebungen ermöglichen eine einfache Anpassung oder Korrektur des durch das Distanzstück definierten Abstandes zwischen den beiden Oberflächenabschnitten, was insbesondere bei der einstückigen Herstellung des Distanzstücks und eines der Wandungsabschnitte durch Druckgießen oder Spritzgießen vorteilhaft ist. Falls sich beispielsweise während eines Vorserientests beim Einbau der Luftleitvorrichtung herausstellen sollte, dass dieser Abstand größer oder kleiner als ursprünglich geplant ist und somit eine in den Öffnungsbereich einzusetzende, auch als Rosette bezeichnete Lamelleneinheit zum Leiten eines durch den Öffnungsbereich strömenden Luftstroms entsprechend zu locker sitzt oder nicht eingesetzt werden kann, so kann durch einfache Nachbearbeitung der für das Druckgießen oder Spitzgießen verwendeten Gießform dieser Abstand für nachfolgend hergestellte Luftleitvorrichtungen entsprechend verkleinert oder vergrößert werden. Hierfür muss lediglich im Bereich der jeweiligen Erhebung entweder Material der Gießform abgetragen werden, beispielsweise durch Fräsen, sodass die entsprechende Erhebung dann größer oder höher wird, oder Material auf die Gießform aufgebracht werden, beispielsweise durch Schweißen, so dass die entsprechende Erhebung dann kleiner oder flacher wird. Um den Abstand zu verkleinern, könnte beispielsweise die Erhebung mit der ersten Stirnfläche abgeflacht und hierfür im Bereich dieser Erhebung Material der Gießform abgetragen werden und die Erhebung mit der zweiten Stirnfläche erhöht und hierfür im Bereich dieser Erhebung Material auf die Gießform aufgebracht werden. Um hingegen den Abstand zu vergrößern, könnte beispielsweise die Erhebung mit der ersten Stirnfläche erhöht und hierfür im Bereich dieser Erhebung Material auf die Gießform aufgebracht werden und die Erhebung mit der zweiten Stirnfläche abgeflacht und hierfür im Bereich dieser Erhebung Material der Gießform abgetragen werden.

Es kann vorgesehen sein, dass:
wenigstens eine der Ausnehmungen wenigstens eine Zugangsöffnung aufweist, die in einem Flächenbereich des zweiten oder ersten Wandungsabschnitts ausgebildet ist;
die Lageröffnung schlitzartig bis zur Zugangsöffnung verläuft.

Das dieser Ausnehmung zugeordnete Distanzstück kann mit dem freien Ende in die Zugangsöffnung eingesetzt und längs der schlitzartigen Lageröffnung weiter in die Ausnehmung hinein bis in die gewünschte Position geschoben werden. Der Flächenbereich kann nach Bedarf auf beliebige Art und Weise angeordnet sein und beispielsweise außerhalb des Öffnungsbereichs an den Mündungsabschnitt stoßen oder in dem jeweiligen Oberflächenabschnitt des zweiten oder ersten Wandungsabschnitts ausgebildet sein.

Es kann vorgesehen sein, dass wenigstens eine der vorgeschlagenen Vorrichtungen zusätzlich aufweist wenigstens eine Lamelleneinheit mit wenigstens zwei Lamellen zum Leiten eines Luftstroms, der durch den Öffnungsbereich zu dem Mündungsabschnitt strömt; wobei: wenigstens eine der Lamelleneinheiten an wenigstens einem der Wandungsabschnitte derart angebracht ist, dass die Lamellen zumindest teilweise in dem Öffnungsbereich liegen und sich von dem ersten zu dem zweiten Oberflächenabschnitt erstrecken.

Eine derartige Lamelleneinheit wird auch als Rosette bezeichnet und meist als ein separates Bauteil unabhängig von den Wandungsabschnitten hergestellt.

Es kann vorgesehen sein, dass bei wenigstens einem der Distanzstücke der Mittelabschnitt als Lamelle zum Leiten eines Luftstroms, der durch den Öffnungsbereich zu dem Mündungsabschnitt strömt, ausgebildet ist.

Eine derartiges Distanzstück kann beispielsweise zusätzlich zu einer separaten Lamelleneinheit, wie sie vorstehend beschrieben wurde, vorgesehen sein.

Es kann vorgesehen sein, dass wenigstens eine der vorgeschlagenen Vorrichtungen zusätzlich aufweist: wenigstens eine Lamelle zum Leiten eines Luftstroms, der durch den Öffnungsbereich zu dem Mündungsabschnitt strömt;
wobei: wenigstens eine der Lamellen mit einem stromaufwärtigen Flächenbereich an einem stromabwärtigen Flächenbereich des Mittelabschnitts eines der Distanzstücke anliegt.

Das Distanzstück stützt somit die Lamelle. Eine derartige Lamelle kann beispielsweise zu einer Lamelleneinheit, wie sie vorstehend beschrieben wurde, gehören.

Es kann vorgesehen sein, dass der Querschnitt des Mittelabschnitts aerodynamisch an den Querschnitt der Lamelle angepasst ist.

Es kann vorgesehen sein, dass der erste Wandungsabschnitt durch Druckgießen oder Spritzgießen hergestellt ist und/oder der zweite Wandungsabschnitt durch Druckgießen oder Spritzgießen hergestellt ist.

Bevorzugt kann jedes Distanzstück einstückig mit einem der Wandungsabschnitte durch Druckgießen oder Spritzgießen hergestellt sein.

Ein Innenverkleidungsteil für ein Fahrzeug kann aufweisen:
einen Grundkörper mit einem ersten Oberflächenabschnitt, der beim bestimmungsgemäßen Einbau des Innenverkleidungsteils in das Fahrzeug von einem Innenraum des Fahrzeugs abgewandt ist;
einen Zusatzkörper mit einem zweiten Oberflächenabschnitt, der zu dem ersten Oberflächenabschnitt hin weist;
wobei:
   der Zusatzkörper derart an den Grundkörper gekoppelt ist, dass die Oberflächenabschnitte zusammen einen Öffnungsbereich einer Vorrichtung zum Einsaugen von Luft aus dem Innenraum oder zum Ausblasen von Luft in den Innenraum bilden;
   der Öffnungsbereich einen Mündungsabschnitt hat, die beim bestimmungsgemäßen Einbau des Innenverkleidungsteils in das Fahrzeug in den Innenraum mündet.
   Dieses Innenverkleidungsteil kann beispielsweise eine Instrumententafel eines Fahrzeugs sein.

Da bei dem Innenverkleidungsteil der Zusatzkörper zusammen mit dem Grundkörper den Öffnungsbereich einer Luftleitvorrichtung bilden, ist diese Luftleitvorrichtung in das Innenverkleidungsteil integriert und nicht als separates Bauteil ausgeführt, wie es gemäß der Lehre der DE 23 40 749 A1 bei der bekannten Entfrosterdüse und der bekannten Armaturentafel der Fall ist. Somit kann eine wie bei der bekannten Armaturentafel vorgesehene Ausnehmung oder Durchbrechung in dem Innenverkleidungsteil für den Durchgang der Luftleitvorrichtung entfallen, sodass bei der integrierten Bauweise von Luftleitvorrichtung und Innenverkleidungsteil der Platzbedarf für die Ausbildung des Öffnungsbereichs geringer als bei der bekannten separaten Bauweise von Entfrosterdüse und Armaturentafel ist.

Die Kopplung des Zusatzkörpers an den Grundkörper kann nach Bedarf auf beliebige Art und Weise ausgebildet sein und beispielsweise eine lösbare oder unlösbare und/oder eine formschlüssige und/oder kraftschlüssige Befestigung oder Verbindung sein und/oder durch Kleben und/oder Schweißen hergestellt sein.

Falls das Innenverkleidungsteil die Instrumententafel eines Fahrzeugs ist, so kann beim bestimmungsgemäßen Einbau beispielsweise der Zusatzkörper bezogen auf die Längsachse oder Wankachse des Kraftfahrzeugs vor dem Grundkörper und näher zu der Frontscheibe als der Grundkörper liegen, der erste Oberflächenabschnitt bezogen auf die Längsachse nach vorne weisen, der zweite Oberflächenabschnitt bezogen auf die Längsachse nach hinten weisen und den Mündungsabschnitt in einer Oberseite der Instrumententafel ausgebildet, auf die Frontscheibe gerichtet und als langer, schmaler Schlitz ausgebildet sein, der bezogen auf die Längsachse und die Hochachse oder Gierachse des Kraftfahrzeugs schräg oder quer und/oder im Wesentlichen längs der Gierachse des Fahrzeugs verläuft und geradlinig oder gebogen ist.

Es kann vorgesehen sein, dass der Öffnungsbereich einen Mündungsabschnitt aufweist, der an den Mündungsabschnitt grenzt und von dem Grundkörper und/oder dem Zusatzkörper gebildet wird.

Der Mündungsabschnitt kann vom Grundkörper allein oder vom Zusatzkörper allein oder vom Grundkörper und Zusatzkörper zusammen gebildet werden. In den beiden ersten Fällen kann eine im Vergleich zum letzten Fall bessere Stabilität des Mündungsabschnitts, wohingegen im letzten Fall eine im Vergleich zu den beiden ersten Fällen einfachere Herstellung des Mündungsabschnitts erreicht werden kann.

Es kann vorgesehen sein, dass wenigstens eines der Innenverkleidungsteile zusätzlich aufweist: wenigstens ein Distanzstück mit einem ersten Endabschnitt, einem zweiten Endabschnitt und einem Mittelabschnitt, der zwischen den beiden Endabschnitten liegt; wobei:
der erste Endabschnitt an den ersten Oberflächenabschnitt und der zweite Endabschnitt an den zweiten Oberflächenabschnitt gekoppelt ist;
der Mittelabschnitt einen Abstand zwischen den Oberflächenabschnitten überbrückt.

Da das Distanzstück mit seinen Endabschnitten an die Oberflächenabschnitte gekoppelt ist, kann eine unerwünschte Veränderung des Querschnitts des Öffnungsbereichs verhindert oder eingeschränkt werden, die durch eine Verformung des Grundkörpers und des Zusatzkörpers beispielsweise aufgrund von Wärmeeinwirkung beim Durchströmen von warmer oder kühler Luft und/oder von mechanischer Belastung beim Einbau des Innenverkleidungsteils in das Fahrzeug oder beim Koppeln des Zusatzkörpers an den Grundkörper hervorgerufen wird.

Die Kopplung eines der Endabschnitte an den jeweils zugeordneten Oberflächenabschnitt kann nach Bedarf auf beliebige Art und Weise ausgebildet sein und beispielsweise eine lösbare oder unlösbare und/oder eine formschlüssige und/oder kraftschlüssige und/oder stoffschlüssige Befestigung oder Verbindung sein und/oder durch Kleben und/oder Schweißen und/oder einstückiges Urformen hergestellt sein.

Es kann vorgesehen sein, dass der erste Endabschnitt in einem an den Mündungsabschnitt grenzenden Randbereich des ersten Oberflächenabschnitts und der zweite Endabschnitt in einem an den Mündungsabschnitt grenzenden Randbereich des zweiten Oberflächenabschnitts liegt.

Hierdurch kann die Form des Mündungsabschnitts besonders gut stabilisiert werden.

Es kann vorgesehen sein, dass:
wenigstens eine Ausnehmung in dem Zusatzkörper ausgebildet ist, die wenigstens eine Lageröffnung, die in dem zweiten Oberflächenabschnitt ausgebildet ist, eine erste Anlagefläche, die zu dem ersten Oberflächenabschnitt hin weist, und eine zweite Anlagefläche aufweist, die zu der ersten Anlagefläche hin weist;
bei wenigstens einem der Distanzstücke der zweite Endabschnitt als freies Ende ausgebildet ist und eine erste Stirnfläche, die von dem ersten Oberflächenabschnitt weg weist, und eine zweite Stirnfläche aufweist, die von der ersten Stirnfläche weg weist;
das Distanzstück durch die Lageröffnung ragt und mit dem zweiten Endabschnitt derart in der Ausnehmung sitzt, dass die erste Stirnfläche an der ersten Anlagefläche und die zweite Stirnfläche an der zweiten Anlagefläche anliegt.

Hierdurch wird eine lösbare, formschlüssige Kopplung zwischen dem Zusatzkörper und dem zweiten Endabschnitt erzielt.

Alternativ oder zusätzlich kann vorgesehen sein, dass:
wenigstens eine Ausnehmung in dem Grundkörper ausgebildet ist, die wenigstens eine Lageröffnung, die in dem ersten Oberflächenabschnitt ausgebildet ist, eine erste Anlagefläche, die zu dem zweiten Oberflächenabschnitt hin weist, und eine zweite Anlagefläche aufweist, die zu der ersten Anlagefläche hin weist;
bei wenigstens einem der Distanzstücke der erste Endabschnitt als freies Ende ausgebildet ist und eine erste Stirnfläche, die von dem zweiten Oberflächenabschnitt weg weist, und eine zweite Stirnfläche aufweist, die von der ersten Stirnfläche weg weist;
das Distanzstück durch die Lageröffnung ragt und mit dem ersten Endabschnitt derart in der Ausnehmung sitzt, dass die erste Stirnfläche an der ersten Anlagefläche und die zweite Stirnfläche an der zweiten Anlagefläche anliegt.

Es kann vorgesehen sein, dass:
wenigstens eines der Distanzstücke wenigstens einen Längsschenkel, der an einem Ende an den ersten oder zweiten Oberflächenabschnitt gekoppelt ist, und wenigstens einen Querschenkel aufweist, der von dem anderen Ende des Längsschenkels quer absteht;
die Stirnflächen an dem Querschenkel ausgebildet sind.

Bevorzugt bilden Längsschenkel und Querschenkel zusammen eine L-förmige oder T-förmige oder pilzförmige oder pfeilförmige Struktur.

Es kann vorgesehen sein, dass:
wenigstens einer der Querschenkel auf seiner zu der ersten Anlagefläche weisenden Seite wenigstens eine Erhebung aufweist, an der die erste Stirnfläche ausgebildet ist; und/oder
wenigstens einer der Querschenkel auf seiner zu der zweiten Anlagefläche weisenden Seite wenigstens eine Erhebung aufweist, an der die zweite Stirnfläche ausgebildet ist.

Diese Erhebungen ermöglichen eine einfache Anpassung oder Korrektur des durch das Distanzstück definierten Abstandes zwischen den beiden Oberflächenabschnitten, was insbesondere bei der einstückigen Herstellung des Distanzstücks und des Grundkörpers oder Zusatzkörpers durch Druckgießen oder Spritzgießen vorteilhaft ist. Falls sich beispielsweise während eines Vorserientests beim Einbau des Innenverkleidungsteils in das Fahrzeug oder beim Koppeln des Zusatzkörpers an den Grundkörper herausstellen sollte, dass dieser Abstand größer oder kleiner als ursprünglich geplant ist und somit eine in den Öffnungsbereich einzusetzende, auch als Rosette bezeichnete Lamelleneinheit zum Leiten eines durch den Öffnungsbereich strömenden Luftstroms entsprechend zu locker sitzt oder nicht eingesetzt werden kann, so kann durch einfache Nachbearbeitung der für das Druckgießen oder Spitzgießen verwendeten Gießform dieser Abstand für nachfolgend hergestellte Innenverkleidungsteile entsprechend verkleinert oder vergrößert werden. Hierfür muss lediglich im Bereich der jeweiligen Erhebung entweder Material der Gießform abgetragen werden, beispielsweise durch Fräsen, sodass die entsprechende Erhebung dann größer oder höher wird, oder Material auf die Gießform aufgebracht werden, beispielsweise durch Schweißen, sodass die entsprechende Erhebung dann kleiner oder flacher wird. Um den Abstand zu verkleinern, könnte beispielsweise die Erhebung mit der ersten Stirnfläche abgeflacht und hierfür im Bereich dieser Erhebung Material der Gießform abgetragen werden und die Erhebung mit der zweiten Stirnfläche erhöht und hierfür im Bereich dieser Erhebung Material auf die Gießform aufgebracht werden. Um hingegen den Abstand zu vergrößern, könnte beispielsweise die Erhebung mit der ersten Stirnfläche erhöht und hierfür im Bereich dieser Erhebung Material auf die Gießform aufgebracht werden und die Erhebung mit der zweiten Stirnfläche abgeflacht und hierfür im Bereich dieser Erhebung Material der Gießform abgetragen werden.

Es kann vorgesehen sein, dass:
wenigstens eine der Ausnehmungen wenigstens eine Zugangsöffnung aufweist, die in einem Flächenbereich des Zusatzkörpers oder Grundkörpers ausgebildet ist;
die Lagerlöffnung schlitzartig bis zur Zugangsöffnung verläuft.

Das dieser Ausnehmung zugeordnete Distanzstück kann mit dem freien Ende in die Zugangsöffnung eingesetzt und längs der schlitzartigen Lageröffnung weiter in die Ausnehmung hinein bis in die gewünschte Position geschoben werden. Der Flächenbereich kann nach Bedarf auf beliebige Art und Weise angeordnet sein und beispielsweise außerhalb des Öffnungsbereichs an den Mündungsabschnitt stoßen oder in dem jeweiligen Oberflächenabschnitt des Zusatzkörpers oder Grundkörpers ausgebildet sein.

Es kann vorgesehen sein, dass wenigstens eines der vorgeschlagenen Innenverkleidungsteile zusätzlich aufweist: wenigstens eine Lamelleneinheit mit wenigstens zwei Lamellen zum Leiten eines Luftstroms, der durch den Öffnungsbereich zu dem Mündungsabschnitt strömt; wobei: wenigstens eine der Lamelleneinheiten an dem Grundkörper und/oder dem Zusatzkörper derart angebracht ist, dass die Lamellen zumindest teilweise in dem Öffnungsbereich liegen und sich von dem ersten zu dem zweiten Oberflächenabschnitt erstrecken.

Eine derartige Lamelleneinheit wird auch als Rosette bezeichnet und meist als ein separates Bauteil unabhängig von Grundkörper und Zusatzkörper hergestellt.

Es kann vorgesehen sein, dass bei wenigstens einem der Distanzstücke der Mittelabschnitt als Lamelle zum Leiten eines Luftstroms, der durch den Öffnungsbereich zu dem Mündungsabschnitt strömt, ausgebildet ist.

Eine derartiges Distanzstück kann beispielsweise zusätzlich zu einer separaten Lamelleneinheit, wie sie vorstehend beschrieben wurde, vorgesehen sein.

Es kann vorgesehen sein, dass wenigstens eines der vorgeschlagenen Innenverkleidungsteile zusätzlich aufweist: wenigstens eine Lamelle zum Leiten eines Luftstroms, der durch den Öffnungsbereich zu dem Mündungsabschnitt strömt; wobei: wenigstens eine der Lamellen mit einem stromaufwärtigen Flächenbereich an einem stromabwärtigen Flächenbereich des Mittelabschnitts eines der Distanzstücke anliegt.

Das Distanzstück stützt somit die Lamelle. Eine derartige Lamelle kann beispielsweise zu einer Lamelleneinheit, wie sie vorstehend beschrieben wurde, gehören.

Es kann vorgesehen sein, dass der Querschnitt des Mittelabschnitts aerodynamisch an den Querschnitt der Lamelle angepasst ist.

Es kann vorgesehen sein, dass der Grundkörper durch Druckgießen oder Spritzgießen hergestellt ist und/oder der Zusatzkörper durch Druckgießen oder Spritzgießen hergestellt ist.

Bevorzugt kann jedes Distanzstück einstückig mit dem Grundkörper oder dem Zusatzkörper durch Druckgießen oder Spritzgießen hergestellt sein.

Es kann vorgesehen sein, dass die Vorrichtung zum Einsaugen oder Ausblasen von Luft wie eine der vorgeschlagenen Luftleitvorrichtungen ausgebildet ist.

Die Erläuterungen zu einem der Aspekte der Erfindung, insbesondere zu einzelnen Merkmalen dieses Aspektes, gelten entsprechend auch analog für die anderen Aspekte der Erfindung.

Im Folgenden werden Ausführungsformen und Ausführungsbeispiele der Erfindung beispielsweise anhand der beigefügten Zeichnungen näher erläutert werden. Die daraus hervorgehenden einzelnen Merkmale sind jedoch nicht auf die einzelnen Ausführungsformen und Ausführungsbeispiele beschränkt, sondern können mit weiter oben beschriebenen einzelnen Merkmalen und/oder mit einzelnen Merkmalen anderer Ausführungsformen und Ausführungsbeispiele verbunden werden. Die Zeichnungen zeigen in:
FIG. 1 eine Perspektivansicht einer ersten Ausführungsform eines Kanalkörpers für den Innenraum eines Fahrzeugs, das insbesondere mit einem Innenverkleidungsteil für ein Fahrzeug strukturell integriert sein kann;
FIG. 2 eine Perspektivansicht einer zweiten Ausführungsform des Kanalkörpers;
FIG. 3 eine Perspektivansicht einer dritten Ausführungsform des Kanalkörpers;
FIG. 4 eine Schnittansicht längs der Linie IV-IV in den FIG. 1 bis 3;
FIG. 5 eine ausgeschnittene Perspektivansicht einer vierten Ausführungsform des Kanalkörpers;
FIG. 6 die Einzelheit VI der FIG. 5;
FIG. 7 die Einzelheit VII der FIG. 5;
FIG. 8 die Einzelheit VIII der FIG. 5;
FIG. 9 eine Perspektivansicht einer ersten Ausführungsform einer Luftleitvorrichtung für ein Fahrzeug;
FIG. 10 eine Perspektivansicht von Teilen, die zu einer fünften Ausführungsform des Innenverkleidungsteils oder zu einer zweiten Ausführungsform der Luftleitvorrichtung gehören;
FIG. 11 die Einzelheit XI der FIG. 10;
FIG. 12 die Einzelheit XII der FIG. 10;
FIG. 13 die Einzelheit XIII der FIG. 10;
FIG. 14 eine ausgeschnittene Perspektivansicht einer sechsten Ausführungsform des Kanalkörpers;
FIG. 15 eine andere ausgeschnittene Perspektivansicht der sechsten Ausführungsform des Kanalkörpers;
FIG. 16 eine Perspektivansicht und eine Rückansicht eines Distanzstücks und einer Lamelle der sechsten Ausführungsform des Kanalkörpers;
FIG. 17 eine ausgeschnittene Perspektivansicht einer siebenten Ausführungsform des Kanalkörpers;
FIG. 18 eine andere ausgeschnittene Perspektivansicht der siebenten Ausführungsform des Kanalkörpers;
FIG. 19 eine Perspektivansicht und eine Rückansicht eines Distanzstücks der siebenten Ausführungsform des Kanalkörpers.

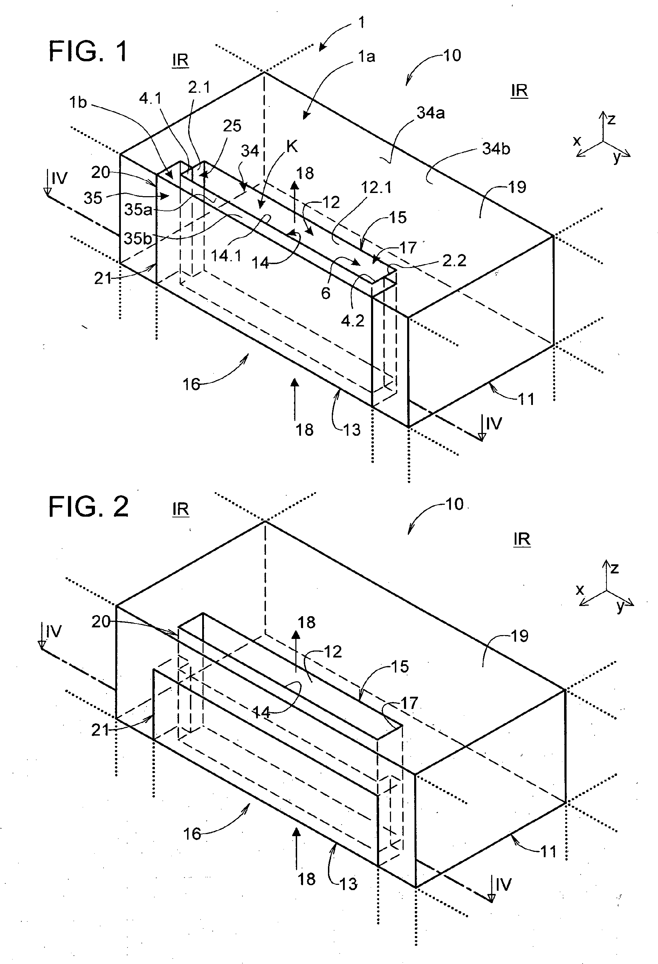

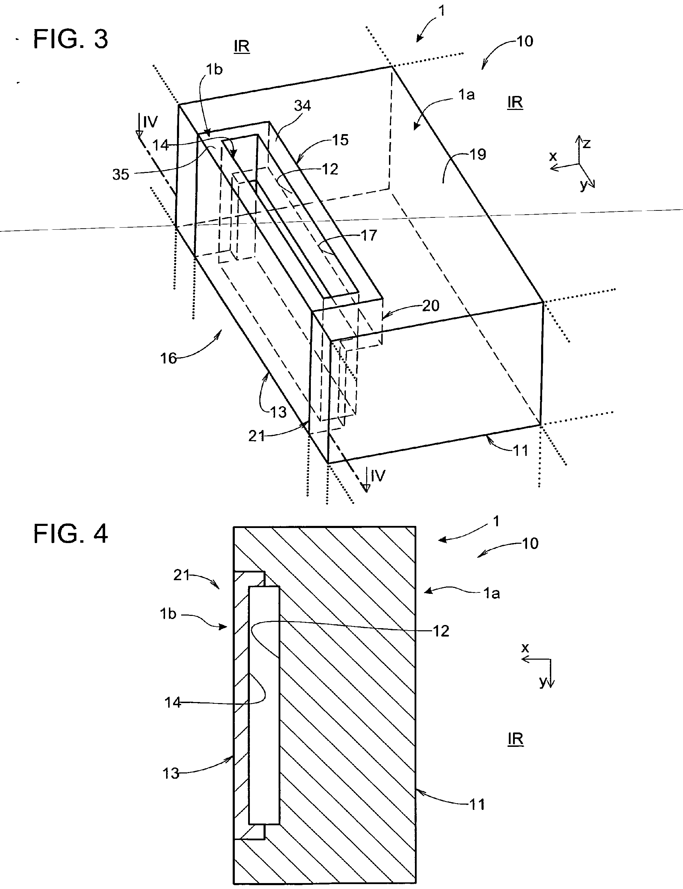

In der FIG. 1 und der FIG. 4 ist schematisch eine erste Ausführungsform eines Kanalkörpers 1 nach der Erfindung dargestellt. Der Kanalkörper 1 kann insbesondere derart ausgeführt sein, dass dieser Bestandteil einer Luftleitvorrichtung oder Belüftungsvorrichtung 10 mit einer Gebläsevorrichtung zur Erzeugung eines Luftstroms im Kanalkörper 1 sein kann. Weiterhin kann der Kanalkörper 1 oder die Belüftungsvorrichtung 10 insbesondere derart ausgeführt sein, dass dieser bzw. diese mit einem Innenverkleidungsteil für ein nicht dargestelltes Fahrzeug integriert werden kann. Insbesondere kann dass und bildet hier beispielsweisebeispielartig eine Instrumententafel eines Fahrzeugs sein.

Das Innenverkleidungsteil 10 weist einen Kanalkörper 1 mit einem sich entlang einer Z-Richtung eines kartesischen XYZ-Kanalkörper-Koordinatensystems erstreckenden Mündungsabschnitt 17 mit einem Kanalabschnitt K, mit einer Oberseite 19 und einer in dieser ausgebildeten Mündungsabschnitts-Öffnung 15 auf. Der Mündungsabschnitt 17 weist zur Ausbildung des Kanalabschnitts K einen ersten Wandungsabschnitt 34 mit einem ersten Oberflächenabschnitt 12 und einen zweiten Wandungsabschnitt 35 mit einem zweiten Oberflächenabschnitt 14 auf, der dem ersten Oberflächenabschnitt 12 gegenüber liegt und somit dem ersten Oberflächenabschnitt 12 zugewandt ist, wobei der erste Oberflächenabschnitt 12 und der zweite Oberflächenabschnitt 14 den Kanalabschnitt K umgrenzen.

Der Kanalkörper 1 kann einteilig, also als ein Stück hergestellt sein. Alternativ dazu kann der Kanalkörper 1 mehrteilig realisiert sein. Dabei kann insbesondere vorgesehen sein, dass der Kanalkörper 1 aus einem Grundkörper 11, der den ersten Wandungsabschnitt 34 aufweist, und einem Zusatzkörper 13, der den zweiten Wandungsabschnitt 35 aufweist, zusammengesetzt ist.

Die Belüftungsvorrichtung 10 ist bei seiner bevorzugten Anwendung Bestandteil eines Fahrzeugs und durch Anbringung auf ein Karosserie-Trägerteil in dessen Innenraum derart integriert, dass der Kanalabschnitt K mit der Mündungsabschnitts-Öffnung 15 in den Innenraum IR des Fahrzeugs mündet. Bestimmungsgemäß wird der Mündungsabschnitt 17 auf einem Karosserie-Trägerteil angebracht, wobei der Mündungsabschnitt 17 zusammen mit dem Karosserie-Trägerteil eine Belüftungsvorrichtung 16 für ein Fahrzeug bilden.

Der Kanalkörper 1 des Innenverkleidungsteils 10 kann, wie es in der Figur 1 dargestellt ist, insbesondere einen Grundkörper 11 mit dem ersten Wandungsabschnitt 34 und dem Oberflächenabschnitt 12 sowie einen Zusatzkörper 13 mit dem zweiten Wandungsabschnitt 35 und dem zweiten Oberflächenabschnitt 14 aufweisen, der dem ersten Oberflächenabschnitt 12 gegenüber liegt, so dass die Oberflächenabschnitte 12, 14 einen Mündungsabschnitts-Öffnung 15 ausbilden, der beim bestimmungsgemäßen Einbau der Belüftungsvorrichtung 16 in das Fahrzeug in den Innenraum IR mündet.

Der Zusatzkörper 13 kann somit der zweite Wandungsabschnitt 35 sein.

In der Darstellung der Figur 1 weisen der erste Wandungsabschnitt 34 und der zweite Wandungsabschnitt 35 jeweils eine erste Seitenwandungs-Teilfläche 2.1 bzw. 4.1 und eine zweite Seitenwandungs-Teilfläche 2.2 bzw. 4.2 und eine jeweils zwischen einer ersten Seitenwandungs-Teilfläche 2.1 bzw. 4.1 und der zweiten Seitenwandungs-Teilfläche 2.2 bzw. 4.2 gelegene Längswandungsfläche 14.1 bzw. 12.1 auf. Dabei sind die Längswandungsflächen 14.1 und 12.1 in der X-Richtung gesehen einander gegenüberliegend angeordnet und schließen sich in der Umfangsrichtung der Mündungsabschnitts-Öffnung 15 gesehen jeweils die ersten Seitenwandungs-Teilflächen 2.1 und 4.1 und die zweiten Seitenwandungs-Teilflächen 2.2 bzw. 4.2 aneinander an. Somit bilden die ersten Seitenwandungs-Teilflächen 2.1 bzw. 4.1 eine erste Seitenwandungs-Fläche 5 und die zweiten Seitenwandungs-Teilflächen 2.2 bzw. 4.2 eine zweite Seitenwandungs-Fläche 6.

Alternativ kann auch vorgesehen sein, dass der erste Wandungsabschnitt 34 oder der zweite Wandungsabschnitt 35 lediglich eine Längswandungsfläche 14.1 bzw. 12.1 aufweist, so dass der jeweils andere aus der Kombination von erstem und zweitem Wandungsabschnitt 34, 35 zwei in der Y-Richtung einander gegenüber liegende Seitenwandungs-Teilflächen analog den Seitenwandungs-Teilflächen 2.1 und 2.2 oder 4.1 und 4.2 aufweist, die in der Umfangsrichtung der Mündungsabschnitts-Öffnung 15 gesehen an den jeweiligen Längswandungsflächen 14.1 und 12.1 anschließen. Auch kann jeder Wandungsabschnitt 34, 35 jeweils eine Längswandungsfläche 14.1 und 12.1 und jeweils eine Seitenwandungs-Teilfläche aufweisen, wobei sich die Seitenwandungs-Teilfläche des ersten Wandungsabschnitts 34 und die Seitenwandungs-Teilfläche des zweiten Wandungsabschnitts 35 in der Y-Richtung gesehen einander gegenüber liegen.

Der Übergang zwischen einem Wandungsabschnitt 34 oder 35 und jeweils einer an diesem anschließenden Seitenwandungs-Teilfläche kann in der Umfangsrichtung der Mündungsabschnitts-Öffnung 15 gesehen als Ecke ausgebildet sein, wie dies in der Figur 1 dargestellt ist. Generell können nach einer Ausführungsform der Erfindung auch eine Längswandungsfläche und eine jeweils an diesem anschließende Seitenwandungs-Teilfläche in der Umfangsrichtung der Mündungsabschnitts-Öffnung 15 gesehen einen gekrümmten flächigen Übergang bilden. Dabei kann der erste Oberflächenabschnitt 12 und der zweite Oberflächenabschnitt 14 in der Längsrichtung X des Mündungsabschnitts 17 gesehen entgegen gesetzt zueinander verlaufende Krümmungen aufweisen, z.B. derart, dass der Kanalabschnitt K einen ovalen Querschnitt hat.

Der erste Oberflächenabschnitt 12 und der zweite Oberflächenabschnitt 14 bilden in der X-Richtung gesehen eine Umgrenzung des Kanalabschnitts K aus, bei der die Belüftungsvorrichtung 16 einen durch die Pfeile 18 angedeuteten Luftstrom von einer nicht dargestelltem Klimaanlage oder Heizungsanlage des Fahrzeugs durch den Mündungsabschnitt 17 gerichtet auf die Frontscheibe leitet.

Die Belüftungsvorrichtung 16 weist zumindest ein Distanzstück 22 auf, das mit jeweils einem ersten Endabschnitt 23.1 an einen der Wandungsabschnitte 34, 35 und einem zweiten Endabschnitt 23.2 an den jeweils anderen der Wandungsabschnitte 35 bzw. 34 gekoppelt ist und der einen zwischen den beiden Endabschnitten 23.1, 23.2 gelegenen Mittelabschnitt 24 aufweist, um einen durch die Länge des Distanzstück 22 bestimmten Mindestabstand zwischen den einander gegenüber liegenden Oberflächenabschnitten 12, 14 einzurichten.

Bei der Ausführungsform, bei der der Kanalkörper 1 aus einem Grundkörper 11 und einem Zusatzkörper 13 zusammengesetzt ist, können der Grundkörper 11 und der Zusatzkörper 13 derart ausgebildet und derart aneinander gekoppelt sein, dass der erste Oberflächenabschnitt 12 des Grundkörpers 11 und der zweite Oberflächenabschnitt 14 des Zusatzkörpers 13 zusammen die Mündungsabschnitts-Öffnung 15 zum Einsaugen von Luft aus dem Innenraum IR oder zum Ausblasen von Luft in den Innenraum IR bilden. Bei dieser Ausführungsform können der Zusatzkörper 13 und der Grundkörper 11 durch Spritzgießen aus thermoplastischem Kunststoff hergestellt und durch Schweißen miteinander verbunden sein.

Die Luftleitvorrichtung oder Belüftungsvorrichtung 10 kann beispielsweise eine Entfrosterdüse für eine nicht dargestellte Frontscheibe des Kraftfahrzeugs sein. Bei einem solchen Innenverkleidungs-Bauteil 16 kann insbesondere vorgesehen sein, dass die Körper 11, 13 zusammen die Mündungsabschnitts-Öffnung 15 ausbilden, sodass die Belüftungsvorrichtung 10 in das Innenverkleidungsteil 16 integriert und nicht als separates Bauteil ausgeführt ist. Dabei wird somit die äußere Formgebung und das Gehäuse der Belüftungsvorrichtung 16 durch diejenigen Teile oder Segmente der Körper 11, 13 gebildet, die die Mündungsabschnitts-Öffnung 15 umgeben oder definieren.

Die Belüftungsvorrichtung 16 und das Karosserie-Trägerteil, das zur Verbindung mit der Belüftungsvorrichtung 16 vorgesehen ist, können derart ausgeführt sein, dass beim bestimmungsgemäßen Einbau in das Fahrzeug der Zusatzkörper 13 entgegen der Längsachse oder Wankachse des Kraftfahrzeugs gesehen, die hier auch als X_{F}-Achse bezeichnet wird, vor dem Grundkörper 11 und somit näher zu der Frontscheibe als der Grundkörper 11 gelegen ist.

Die Oberseite 19 des Kanalkörpers 1 wird gebildet durch
eine in Z-Richtung orientierte Oberfläche 34a einer sich quer zur Z-Richtung erstreckenden Stirnwand 34b, die an den ersten Wandungsabschnitt 34 anschließt und mit diesem ein erstes Kanalkörper-Bauteil 1a bildet, und
eine in Z-Richtung orientierte Oberfläche 35a einer sich quer zur Z-Richtung erstreckenden Stirnwand 35b, die an den zweiten Wandungsabschnitt 35 anschließt und mit diesem ein zweites Kanalkörper-Bauteil 1b bildet.

Dabei kann insbesondere vorgesehen sein, dass die Stirnwand 34b und der erste Wandungsabschnitt 34 als ein Stück, insbesondere als ein Kunststoffteil in einem Verfahrensschritt durch Spritzgießen oder Pressverformen, hergestellt ist. Weiterhin kann dabei vorgesehen sein, dass die Stirnwand 34b Bestandteil eines Trägerteils eines Innenverkleidungsteils und ein sich flächig erstreckendes Trägerteil eines Innenverkleidungsteils sein kann und dabei insbesondere eine Instrumententafel ist. Dabei bildet der erste Wandungsabschnitt 34 optional zusammen mit dem zweiten Wandungsabschnitt 35 ein Anschlussstück zum Anschließen einer Luftleitung, die z.B. an ein Anschlussstück einer Luftquelle wie eines Wärmetauschers oder einer Frischluft-Öffnung, ein Auslassabschnitt der Klimaanlage oder Heizungsanlage sein kann. Das Anschlussstück kann beispielsweise als rohrförmiger Stutzen ausgebildet sein. Dadurch kann vorgesehen sein, dass ist der Mündungsabschnitt 17 in einer Oberseite 19 des Innenverkleidungsteils 10 ausgebildet und schräg auf die Frontscheibe gerichtet ist und die Mündungsabschnitts-Öffnung 15 als langer, schmaler Schlitz ausgebildet ist. Die Längsrichtung des Mündungsabschnitts 17 verläuft insbesondere entlang der Hochachse oder Gierachse des Kraftfahrzeugs. Der Schlitz kann geradlinig oder insgesamt gekrümmt, und dabei insbesondere entsprechend einer Krümmung der Frontscheibe ausgebildet sein.

In der Figur 2 und der Figur 4 ist eine zweite Ausführungsform des Kanalkörpers 1 schematisch dargestellt. Diese Ausführungsform ähnelt der ersten Ausführungsform, sodass im Folgenden vor Allem die Unterschiede näher erläutert werden. Bei dieser Ausführungsform sind der Grundkörper 11 und der Zusatzkörper 13 als ein Stück z.B. als Spritzgussteil oder Pressformteil insbesondere in einem Verfahrensschritt hergestellt ausgebildet, so dass der Mündungsabschnitt 17 als vom Grundkörper 11 allein gebildet angesehen werden kann, wohingegen der Kanalabschnitt K im Vergleich zur ersten Ausführungsform unverändert gebildet wird. In der FIG. 4 ist ein Querschnitt durch den Kanalabschnitt K dargestellt.

In der FIG. 3 und der FIG. 4 ist eine dritte Ausführungsform des Kanalkörpers 1 schematisch dargestellt. Diese Ausführungsform ähnelt der ersten Ausführungsform, sodass im Folgenden vor Allem die Unterschiede näher erläutert werden. Bei dieser Ausführungsform ist der Mündungsabschnitt 17 aus dem Grundkörper 11 und dem Zusatzkörper 13 gebildet, wobei der obere an der Mündungsabschnitts-Öffnung 15 gelegene Teil des Mündungsabschnitt 17 vom Zusatzkörper 13 zusammen mit dem Grundkörper 11 gebildet wird, so dass der untere Kanalabschnitt K im Vergleich zur ersten Ausführungsform unverändert ist und von dem Grundkörper 11 und dem Zusatzkörper 13 zusammen gebildet wird. In der FIG. 4 ist ein Querschnitt durch den Kanalabschnitt K dargestellt.

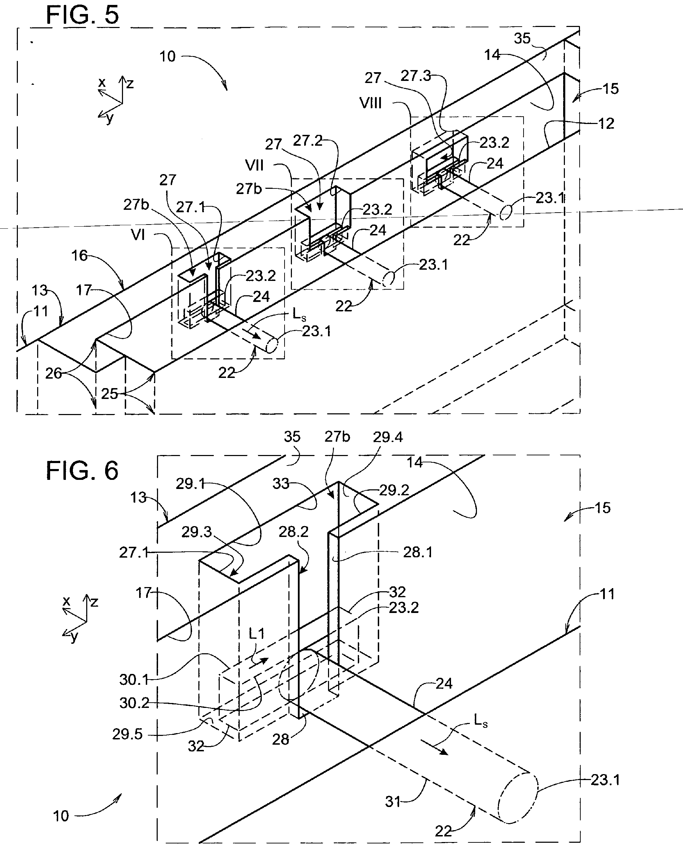

In der FIG. 5, der FIG. 6, der FIG. 7 und der FIG. 8 ist die Ausführungsform des Kanalkörpers 1 nach der Figur 1 dargestellt, der gegenüber der Darstellung der Figur 1 zusätzlich drei gemäß einer ersten Ausführungsform ausgebildete Distanzstücke 22 mit jeweils einem ersten Endabschnitt 23.1, einem zweiten Endabschnitt 23.2 und einem Mittelabschnitt 24 aufweist, der zwischen den beiden Endabschnitten 23 liegt. Der erste Endabschnitt 23.1 ist an den ersten Oberflächenabschnitt 12 und der zweite Endabschnitt 23.2 an den zweiten Oberflächenabschnitt 14 gekoppelt, und der zwischen den Endabschnitten 23 liegende Mittelabschnitt 24 überbrückt einen der Breite des Mündungsabschnitts 17 beziehungsweise des Schlitzes entsprechenden Abstand zwischen den Oberflächenabschnitten 12, 14. Der erste Endabschnitt 23.1 liegt in einem an den Mündungsabschnitt 17 grenzenden Randbereich 25 des ersten Oberflächenabschnitts 12 und der zweite Endabschnitt in einem an den Mündungsabschnitt 17 grenzenden Randbereich 26 des zweiten Oberflächenabschnitts 14 an.

Bei dieser Ausführungsform der Distanzstücke 22 bilden der erste Endabschnitt 23.1 und der Mittelabschnitt 24 eine zylindrische Stange mit einem kreisrunden Querschnitt, die sich in der Stangen-Längsrichtung L_{S} erstreckt. Der Kanalkörper 1 kann derart ausgeführt sein, dass die Stangen-Längsrichtung L_{S} entlang der Längsachse XF des Fahrzeugs verläuft. Der erste Endabschnitt 23.1 ist an den ihm zugeordneten ersten Oberflächenabschnitt 12 stoffschlüssig durch einstückiges Urformen beim Spritzgießen des Grundkörpers 11 gekoppelt, wohingegen der zweite Endabschnitt 23.2 an den ihm zugeordneten zweiten Oberflächenabschnitt 14 auf nachstehend beschriebene Weise formschlüssig gekoppelt ist. Der zweite Endabschnitt 23.2 kann gegenüber dem Mittelabschnitt 24 als Verbreiterung ausgeführt sein und insbesondere stempelförmig ausgebildet sein.

Bei dieser Ausführungsform des Kanalkörpers 1 sind in dem Zusatzkörper 13 zumindest eine Ausnehmung 27 ausgebildet. In der Darstellung der Figur 5 sind beispielsweise drei gemäß einer ersten, einer zweiten und einer dritten Ausführungsform ausgebildete Ausnehmungen 27.1, 27.2, 27.3 ausgebildet, die in den FIG. 6 bis 8 detailliert dargestellt sind. Bei einem Kanalkörper 1 nach der Erfindung kann eine oder können mehrere dieser Ausführungsformen sowie Varianten derselben vorgesehen sein. Alternativ kann die zumindest eine Ausnehmung 27 in dem Grundkörper 11 ausgebildet sein, so dass dabei die hierin beschriebenen Merkmale analog vorzusehen sind.

Eine Ausnehmung 27 weist jeweils eine Lageröffnung oder Koppelöffnung 28 auf, die in dem zweiten Wandungsabschnitt 35 oder dem ersten Wandungsabschnitt 34, also dem zweiten Oberflächenabschnitt 14 bzw. dem ersten Oberflächenabschnitt 12 ausgebildet ist. Die Lageröffnung 28 ist in einer Breitenrichtung Y des Kanalkörpers 1 gesehen mit einer Breite ausgebildet, dass die einander zugewandten die Lageröffnung 28 bildenden Lagerflächen 28.1, 28.2 an dem am ersten Endabschnitt 23.1 gelegenen Abschnitt des Mittelabschnitts 24 anliegen und insbesondere kann vorgesehen sein, dass die Lagerflächen 28.1, 28.2 mit dem an dem am zweiten Endabschnitt 23.2 gelegenen Abschnitt des Mittelabschnitts 24 eine Presspassung bilden. Der zweite Endabschnitt 23.2 kann, wie es in der dargestellten Ausführungsform gezeigt ist, plattenförmig gebildet sein und sich dabei in einer Querrichtung L1 erstrecken und in dieser Richtung über den Mittelabschnitt 24 hinausragen, wobei die Querrichtung L1 quer zur Stangen-Längsrichtung L_{S} verläuft. Insbesondere verläuft die Querrichtung L1 im eingesetzten Zustand des Distanzstücks 22 in der Y-Richtung.

Die Ausnehmung 27 wird durch zwei einander zugewandte und in einem sich in der X-Richtung erstreckenden Abstand zueinander verlaufende Ausnehmungs-Längsflächen oder Anlageflächen 29.1 und 29.2 sowie Ausnehmungs-Seitenflächen 29.3 und 29.4 und einer Ausnehmungs-Bodenfläche 29.5 gebildet. In Bezug auf eine der vorrgenannten Ausführungsformen kann die Ausnehmung 27 dabei derart geformt sein, dass diese den zweiten Endabschnitt 23.2 des Distanzstücks 22 insbesondere formschlüssig aufnehmen kann. Dabei kann die Ausnehmung 27 derart geformt sein, dass diese den zweiten Endabschnitt 23.2 des Distanzstücks 22 mit einem Spiel aufnehmen kann. Auch kann die Ausnehmung 27 generell derart geformt sein, dass diese zusammen mit dem zweiten Endabschnitt 23.2 des Distanzstücks 22 eine Presspassung bildet. Diese kann so ausgeführt sein, das ein Einführen des zweiten Endabschnitts 23.2 in die Ausnehmung 27 und ein Herausnehmen des zweiten Endabschnitts 23.2 aus der Ausnehmung 27 auf einfache Weise, also ohne der Gefahr einer Verklemmung, möglich ist.

In der dargestellten Ausführungsform weist die erste Ausnehmungs-Längsfläche 29.1 zu dem ersten Oberflächenabschnitt 12 hin die zweite Ausnehmungs-Längsfläche 29.2 zu der ersten Ausnehmungs-Längsfläche 29.1 hin und somit in die x-Richtung. Bei den in der Figur 5 dargestellten Ausführungsformen 27.1, 27.2 ist die Ausnehmung 27 in Z-Richtung, also nach oben hin offen, da diese eine Stirnwand-Öffnung 27b in der Stirnwand-Oberfläche 35b ausbildet. Wie beschrieben kann diese alternativ eine Öffnung (nicht dargestellt) in der Stirnwand-Oberfläche 34b ausbilden, wenn die Ausnehmung 27 in dem ersten Wandungsabschnitt 34 ausgebildet ist. Die Stirnwand-Öffnung 27b hat in dem zweiten Wandungsabschnitt 35 bzw. ersten Wandungsabschnitt 34 eine entlang der Y-Richtung verlaufende Breite, bei der der zweite Endabschnitt 23.2 mit seiner in Querrichtung L1 verlaufenden Länge in die Stirnwand-Öffnung 27b eingeführt werden kann, wobei die Y-Richtung entlang der Querrichtung L1 verläuft.

Optional geht die Lageröffnung 28 in Z-Richtung gesehen in eine Seitenöffnung 27a in dem zweiten Wandungsabschnitt 35 bzw. ersten Wandungsabschnitt 34 über (in Ausführungsform 27.2; nicht in Ausführungsform 27.1). Dabei kann insbesondere vorgesehen sein, dass die Koppelöffnung 28 eine entlang der Y-Richtung verlaufende Breite hat, bei der der zweite Endabschnitt 23.2 mit seiner in Querrichtung L1 verlaufenden Länge in die Seitenöffnung 27a eingeführt werden kann, wobei die Y-Richtung entlang der Querrichtung L1 verläuft.

Bei der Ausführungsform 27.3 öffnet sich die Ausnehmung 27 nicht in Z-Richtung, so dass keine Stirnwand-Öffnung 27b in der Stirnwand-Oberfläche 35b ausgebildet ist.

Außerdem ist bei jedem Distanzstück 22 der zweite Endabschnitt 23.2 als freies Ende ausgebildet und weist eine erste Stirnfläche 30.1, die von dem ersten Oberflächenabschnitt 12 weg und somit in die x-Richtung weist, und eine zweite Stirnfläche 30.2 auf, die von der ersten Stirnfläche 30.1 weg und somit gegen die x-Richtung weist. Des Weiteren ragt jedes Distanzstück 22 mit dem vom ersten Endabschnitt 23.1 fernen Ende des Mittelabschnitts 24 durch die ihm zugeordnete Koppelöffnung 28 und sitzt mit dem zweiten Endabschnitt 23.2 derart in der ihm zugeordneten Ausnehmung 27, dass die erste Stirnfläche 30.1 an der ersten Anlagefläche 29.1 und die zweite Stirnfläche 30.2 an der zweiten Anlagefläche 29.2 anliegt. Hierdurch werden der Grundkörper 11 und der Zusatzkörper 13 in Bezug auf Relativerschiebungen parallel zur x-Achse fixiert.

Bei dieser Ausführungsform der Distanzstücke 22 weist jedes Distanzstück 22 einen Längsschenkel 31, der den ersten Endabschnitt 23.1 und den Mittelabschnitt 24 bildet und somit an einem Ende an den ersten Oberflächenabschnitt 14 gekoppelt ist, und zwei Querschenkel 32 auf, die zusammen den zweiten Endabschnitt 23.2 bilden und von dem anderen Ende des Längsschenkels 31 quer in entgegengesetzten Richtungen, nämlich in die y-Richtung und gegen die y-Richtung abstehen. Somit bilden der Längsschenkel 31 und die Querschenkel 32 eine T-förmige Struktur. Außerdem sind die Stirnflächen 30 an den Querschenkeln 32 ausgebildet. Die Querschenkel 32 bilden hier zusammen einen Quader derart, dass seine Kanten parallel zur x-Achse, y-Achse und z-Achse sind und auf seiner in die x-Richtung weisenden Fläche die erste Stirnfläche 30.1 und auf seiner gegen die x-Richtung weisenden Fläche die zweite Stirnfläche 30.2 liegt.

In der FIG. 6 ist die gemäß der ersten Ausführungsform ausgebildete erste Ausnehmung 27.1 dargestellt.

Bei dieser Ausführungsform weist die erste Ausnehmung 27.1 eine Zugangsöffnung 33 auf und verläuft die Koppelöffnung 28 schlitzartig bis zur Zugangsöffnung 33. Die Zugangsöffnung 33 ist in einem Flächenbereich des Zusatzkörpers 13 ausgebildet, der außerhalb des Öffnungsbereichs 15 und des zweiten Oberflächenabschnitts 14 an den Mündungsabschnitt 17 stößt und Teil der in die z-Richtung weisenden Oberseite des Zusatzkörpers 13 ist. Das Distanzstück 22 kann mit dem zweiten Endabschnitt 23.2 von oben in die Zugangsöffnung 33 eingesetzt und nach unten längs der schlitzartigen Koppelöffnung 28 weiter in die Ausnehmung 27.1 hinein bis in die gewünschte Position geschoben werden.

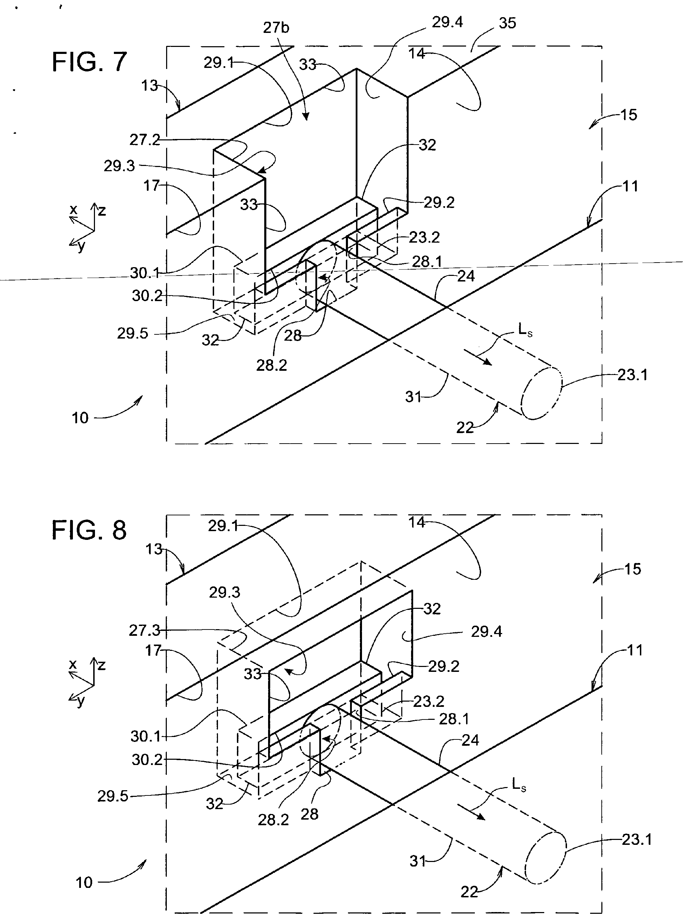

In der FIG. 7 ist die gemäß der zweiten Ausführungsform ausgebildete zweite Ausnehmung 27.2 dargestellt, die der ersten Ausführungsform ähnelt, sodass im Folgenden vor Allem die Unterschiede näher erläutert werden.

Bei dieser Ausführungsform ist die Zugangsöffnung 33 zusätzlich in einem Flächenbereich des Zusatzkörpers 13 ausgebildet, der innerhalb des Öffnungsbereichs 15 an den Mündungsabschnitt 17 stößt und Teil des gegen die x-Richtung weisenden zweiten Oberflächenabschnitts 14 ist. Das Distanzstück 22 kann mit dem zweiten Endabschnitt 23.2 von oben und/oder von hinten, also längs der x-Richtung, in die Zugangsöffnung 33 eingesetzt und nach unten weiter in die Ausnehmung 27.2 hinein bis in die gewünschte Position, in der der Mittelabschnitt 24 in der Koppelöffnung 28 sitzt, geschoben werden.

In der FIG. 8 ist die gemäß der dritten Ausführungsform ausgebildete dritte Ausnehmung 27.3 dargestellt, die der zweiten Ausführungsform ähnelt, sodass im Folgenden vor Allem die Unterschiede näher erläutert werden.

Bei dieser Ausführungsform ist die Zugangsöffnung 33 lediglich in dem Flächenbereich des Zusatzkörpers 13 ausgebildet, der innerhalb des Öffnungsbereichs 15 an den Mündungsabschnitt 17 stößt und Teil des gegen die x-Richtung weisenden zweiten Oberflächenabschnitts 14 ist, nicht jedoch in dem Flächenbereich des Zusatzkörpers 13, der außerhalb des Öffnungsbereichs 15 und des zweiten Oberflächenabschnitts 14 an den Mündungsabschnitt 17 stößt und Teil der in die z-Richtung weisenden Oberseite des Zusatzkörpers 13 ist. Die Ausnehmung 27.3 ist also von oben, also bei Blick auf die Oberseite des Zusatzkörpers 13 nicht zu sehen. Das Distanzstück 22 kann mit dem zweiten Endabschnitt 23.2 von hinten in die Zugangsöffnung 33 eingesetzt und nach unten weiter in die Ausnehmung 27.3 hinein bis in die gewünschte Position, in der der Mittelabschnitt 24 in der Koppelöffnung 28 sitzt, geschoben werden.

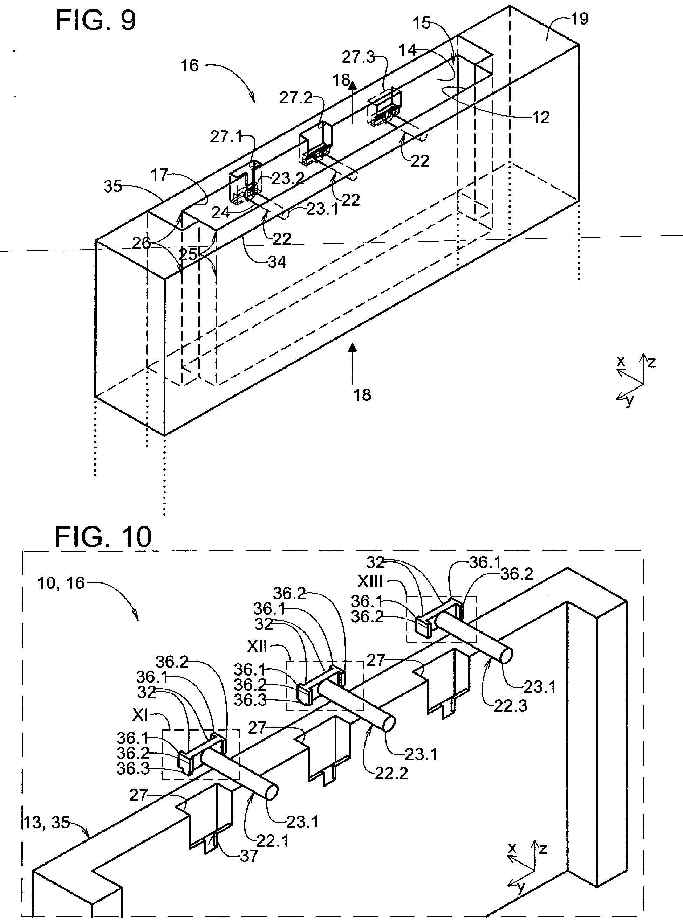

In der FIG. 9 ist eine erste Ausführungsform einer Belüftungsvorrichtung 16 für ein nicht dargestelltes Fahrzeug schematisch dargestellt und bildet hier beispielsweise eine Entfrosterdüse 16 für eine nicht dargestellte Frontscheibe des Kraftfahrzeugs. Diese Ausführungsform ähnelt der Belüftungsvorrichtung 16 der vierten Ausführungsform des Innenverkleidungsteils 10, sodass im Folgenden vor Allem die Unterschiede näher erläutert werden.

Bei dieser Ausführungsform ist die Belüftungsvorrichtung 16 als separates Bauteil ausgeführt und weist einen ersten Wandungsabschnitt 34 mit einem ersten Oberflächenabschnitt 12, einen zweiten Wandungsabschnitt 35 mit einem zweiten Oberflächenabschnitt 14, der zu dem ersten Oberflächenabschnitt 12 hin weist, und drei gemäß der ersten Ausführungsform ausgebildete Distanzstücke 22 mit jeweils einem ersten Endabschnitt 23.1, einem zweiten Endabschnitt 23.2 und einem Mittelabschnitt 24 auf, der zwischen den beiden Endabschnitten 23 liegt.

Die Wandungsabschnitte 34, 35 sind derart ausgebildet und derart aneinander gekoppelt, dass ihre Oberflächenabschnitte 12, 14 zusammen einen Mündungsabschnitts-Öffnung 15 der Belüftungsvorrichtung 16 bilden. Bei dieser Ausführungsform sind die Wandungsabschnitte 34, 35 durch Spritzgießen aus thermoplastischem Kunststoff hergestellt und durch Schweißen aneinander gekoppelt.

Der Mündungsabschnitts-Öffnung 15 hat einen Mündungsabschnitt 17, die beim bestimmungsgemäßen Einbau der Belüftungsvorrichtung 16 in das Fahrzeug in einen Innenraum IR des Fahrzeugs mündet. Die Belüftungsvorrichtung 16 leitet einen durch die Pfeile 18 angedeuteten Luftstrom von einer nicht dargestellten Klimaanlage oder Heizungsanlage des Fahrzeugs durch den Mündungsabschnitt 17 gerichtet auf die Frontscheibe.

Beim bestimmungsgemäßen Einbau der Belüftungsvorrichtung 16 liegt der zweite Wandungsabschnitt 35 bezogen auf die Längsachse oder Wankachse des Kraftfahrzeugs, die hier auch als x-Achse bezeichnet wird, vor dem ersten Wandungsabschnitt 34 und näher zu der Frontscheibe als der erste Wandungsabschnitt 34. Außerdem weist der erste Oberflächenabschnitt 12 bezogen auf die Längsachse nach vorne und der zweite Oberflächenabschnitt 14 bezogen auf die Längsachse nach hinten. Des Weiteren ist der Mündungsabschnitt 17 in einer Oberseite 19 der Belüftungsvorrichtung 16 ausgebildet, schräg auf die Frontscheibe gerichtet und als langer, schmaler Schlitz ausgebildet, der bezogen auf die Längsachse und die Hochachse oder Gierachse des Kraftfahrzeugs, die hier auch als z-Achse bezeichnet wird, quer und längs der Querachse oder Nickachse des Fahrzeugs, die hier auch als y-Achse bezeichnet wird, verläuft. Der Schlitz ist geradlinig, kann aber nach Bedarf auch gebogen sein, insbesondere entsprechend einer Krümmung der Frontscheibe.

An den Mündungsabschnitts-Öffnung 15 schließt bezogen auf den Luftstrom 18 stromaufwärts ein nicht dargestellter Einlassabschnitt an, der an einen Auslassabschnitt der Klimaanlage oder Heizungsanlage angeschlossen und beispielsweise als rohrförmiger Stutzen ausgebildet ist.

Der erste Endabschnitt 23.1 ist an den ersten Oberflächenabschnitt 12 und der zweite Endabschnitt 23.2 an den zweiten Oberflächenabschnitt 14 gekoppelt, und der zwischen den Endabschnitten 23 liegende Mittelabschnitt 24 überbrückt einen der Breite des Mündungsabschnitts 17 beziehungsweise des Schlitzes entsprechenden Abstand zwischen den Oberflächenabschnitten 12, 14. Der erste Endabschnitt 23.1 liegt in einem an den Mündungsabschnitt 17 grenzenden Randbereich 25 des ersten Oberflächenabschnitts 12 und der zweite Endabschnitt in einem an den Mündungsabschnitt 17 grenzenden Randbereich 26 des zweiten Oberflächenabschnitts 14.

Bei dieser Ausführungsform der Distanzstücke 22 bilden der erste Endabschnitt 23.1 und der Mittelabschnitt 24 eine zylindrische Stange mit einem kreisrunden Querschnitt, deren Längsachse parallel zur x-Achse verläuft. Der erste Endabschnitt 23.1 ist an den ihm zugeordneten ersten Oberflächenabschnitt 12 stoffschlüssig durch einstückiges Urformen beim Spritzgießen des ersten Wandungsabschnitt 34 gekoppelt, wohingegen der zweite Endabschnitt 23.2 an den ihm zugeordneten zweiten Oberflächenabschnitt 14 auf nachstehend beschriebene Weise formschlüssig gekoppelt ist.

Bei dieser Ausführungsform der Belüftungsvorrichtung 16 sind in dem zweiten Wandungsabschnitt 35 drei gemäß der ersten, der zweiten und der dritten Ausführungsform ausgebildete Ausnehmungen 27.1, 27.2, 27.3 ausgebildet, die in den FIG. 6 bis 8 detailliert dargestellt und vorstehend detailliert erläutert sind. Diese Ausnehmungen 27 weisen jeweils eine Koppelöffnung 28, die in dem zweiten Oberflächenabschnitt 14 ausgebildet ist, eine erste Anlagefläche 29.1, die zu dem ersten Oberflächenabschnitt 12 hin und somit gegen die x-Richtung weist, und eine zweite Anlagefläche 29.2 auf, die zu der ersten Anlagefläche 29.1 hin und somit in die x-Richtung weist. Außerdem ist bei jedem Distanzstück 22 der zweite Endabschnitt 23.2 als freies Ende ausgebildet und weist eine erste Stirnfläche 30.1, die von dem ersten Oberflächenabschnitt 12 weg und somit in die x-Richtung weist, und eine zweite Stirnfläche 30.2 auf, die von der ersten Stirnfläche 30.1 weg und somit gegen die x-Richtung weist. Des Weiteren ragt jedes Distanzstück 22 mit dem vom ersten Endabschnitt 23.1 fernen Ende des Mittelabschnitts 24 durch die ihm zugeordnete Koppelöffnung 28 und sitzt mit dem zweiten Endabschnitt 23.2 derart in der ihm zugeordneten Ausnehmung 27, dass die erste Stirnfläche 30.1 an der ersten Anlagefläche 29.1 und die zweite Stirnfläche 30.2 an der zweiten Anlagefläche 29.2 anliegt. Hierdurch werden die Wandungsabschnitte 34, 35 in Bezug auf Relativverschiebungen parallel zur x-Achse fixiert.

Bei dieser Ausführungsform der Distanzstücke 22 weist jedes Distanzstück 22 einen Längsschenkel 31, der den ersten Endabschnitt 23.1 und den Mittelabschnitt 24 bildet und somit an einem Ende an den ersten Oberflächenabschnitt 14 gekoppelt ist, und zwei Querschenkel 32 auf, die zusammen den zweiten Endabschnitt 23.2 bilden und von dem anderen Ende des Längsschenkels 31 quer in entgegengesetzten Richtungen, nämlich in die y-Richtung und gegen die y-Richtung abstehen. Somit bilden der Längsschenkel 31 und die Querschenkel 32 eine T-förmige Struktur.

Außerdem sind die Stirnflächen 30 an den Querschenkeln 32 ausgebildet. Die Querschenkel 32 bilden hier zusammen einen Quader derart, dass seine Kanten parallel zur x-Achse, y-Achse und z-Achse sind und auf seiner in die x-Richtung weisenden Fläche die erste Stirnfläche 30.1 und auf seiner gegen die x-Richtung weisenden Fläche die zweite Stirnfläche 30.2 liegt.

Die Oberflächenabschnitte 12, 14, der Mündungsabschnitts-Öffnung 15, die Distanzstücke 22 und die Ausnehmungen 27 entsprechen denen der vierten Ausführungsform des Innenverkleidungsteils 10.

In der FIG. 10, der FIG. 11, der FIG. 12 und der FIG. 13 sind Teile, die zu einer fünften Ausführungsform des Innenverkleidungsteils 10 und/oder zu einer zweiten Ausführungsform der Belüftungsvorrichtung 16 gehören, schematisch dargestellt. Diese Ausführungsform des Innenverkleidungsteils 10 und diese Ausführungsform der Belüftungsvorrichtung 16 ähneln jeweils der vierten Ausführungsform des Innenverkleidungsteils 10 und der ersten Ausführungsform der Belüftungsvorrichtung 16, sodass im Folgenden vor Allem die Unterschiede näher erläutert werden.

Bei diesen Ausführungsformen entsprechen die drei Ausnehmungen 27 in dem Zusatzkörper 13 beziehungsweise dem zweiten Wandungsabschnitt 35 jeweils der gemäß der zweiten Ausführungsform ausgebildeten zweiten Ausnehmung 27.2. Außerdem sind die drei Distanzstücke 22.1, 22.2, 22.3 gemäß einer zweiten Ausführungsform in einer ersten, einer zweiten und einer dritten Variante ausgebildet, zur Verdeutlichung fluchtend über den ihnen zugeordneten Ausnehmungen 27 angeordnet und mit ihren ersten Endabschnitten 23.1 stoffschlüssig an den hier nicht dargestellten Grundkörper 11 beziehungsweise den hier nicht dargestellten ersten Wandungsabschnitt 34 gekoppelt.

Bei allen drei Varianten dieser Ausführungsform der Distanzstücke 22 weist jeder Querschenkel 32 auf seiner zu der ersten Anlagefläche 29.1 weisenden Seite eine erste Erhebung 36.1, an der die erste Stirnfläche 30.1 ausgebildet ist, und auf seiner zu der zweiten Anlagefläche 29.2 weisenden Seite eine zweite Erhebung 36.2 auf, an der die zweite Stirnfläche 30.2 ausgebildet ist. Bei dem ersten Distanzstück 22.1 in der ersten Variante und dem zweiten Distanzstück 22.2 in der zweiten Variante weist jeder Querschenkel 32 auf seiner gegen die z-Richtung und somit nach unten zum Boden 37 der Ausnehmung 27 weisenden Seite eine dritte Erhebung 36.3 auf, wohingegen bei dem dritten Distanzstück 22.3 in der dritten Variante jeder Querschenkel 32 auf seiner gegen die z-Richtung und somit nach unten zum Boden 37 der Ausnehmung 27 weisenden Seite keine Erhebung, sondern eine durchgehend flache oder ebene Unterseite aufweist. Der Abstand zwischen den Stirnflächen 30.1, 30.2 des einen Querschenkels 32 ist hier gleich dem Abstand zwischen den Stirnflächen 30.1, 30.2 des anderen Querschenkels 32, die erste Erhebung 36.1 des einen Querschenkels 32 ist hier so hoch und/oder groß wie die erste Erhebung 36.1 des anderen Querschenkels 32, die zweite Erhebung 36.2 des einen Querschenkels 32 ist hier so hoch und/oder groß wie die zweite Erhebung 36.2 des anderen Querschenkels 32, und die dritte Erhebung 36.3 des einen Querschenkels 32 ist hier so hoch und/oder groß wie die dritte Erhebung 36.3 des anderen Querschenkels 32.

Nach Zusammenbau des Zusatzkörpers 13 und des Grundkörpers 11 beziehungsweise des zweiten Wandungsabschnitts 35 und des ersten Wandungsabschnitts 34 sitzt jedes Distanzstück 22 mit seinem zweiten Endabschnitt 23.2 derart in der zugeordneten Ausnehmung 27, dass bei allen drei Varianten jede erste Erhebung 36.1 mit der ersten Stirnfläche 30.1 an der ersten Anlagefläche 29.1 und jede zweite Erhebung 36.2 mit der zweiten Stirnfläche 30.2 an der zweiten Anlagefläche 29.2 anliegt, dass bei der ersten und der zweiten Variante jede dritte Erhebung 36.3 mit ihrer Unterseite am Boden 37 anliegt, und dass bei der dritten Variante jeder Querschenkel 32 mit seiner Unterseite am Boden 37 anliegt. Somit ist der Zusatzkörper 13 beziehungsweise der zweite Wandungsabschnitt 35 in Bezug auf Verschiebungen relativ zu dem Grundkörper 11 beziehungsweise dem zweiten Wandungsabschnitt 35 in und gegen die x-Richtung sowie in die z-Richtung fixiert. Die Erhebungen 36 ermöglichen eine einfache Anpassung oder Korrektur dieser Fixierungen auf nachstehend beschriebene Weise.

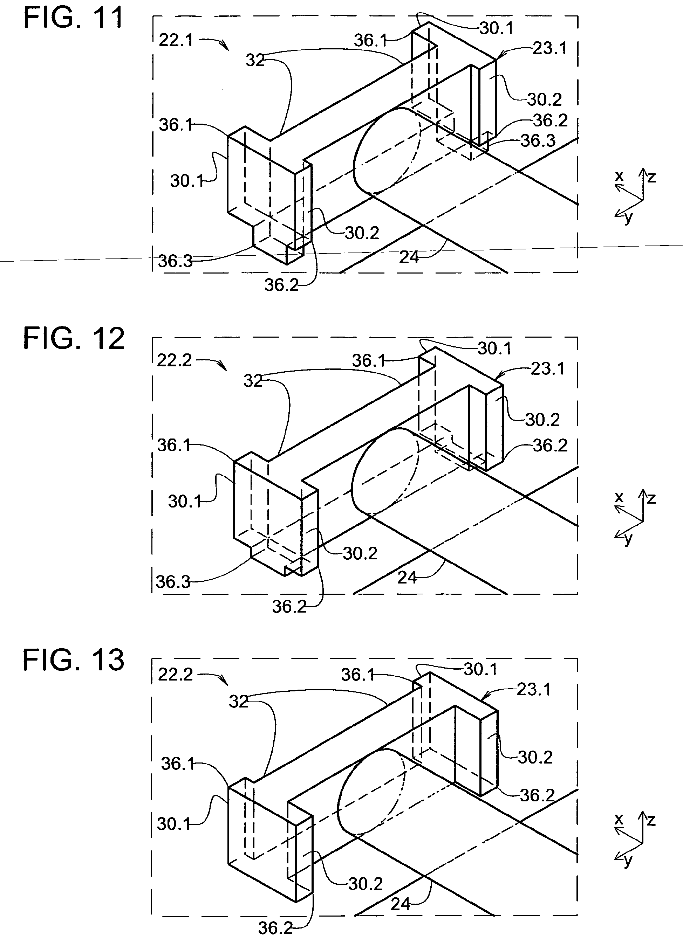

In der FIG. 11 ist das erste Distanzstück 22.1 in der ersten Variante dargestellt, bei der an jedem Querschenkel 32 die erste Erhebung 36.1 höher und/oder größer als die zweite Erhebung 36.2 ist und die dritte Erhebung 36.3 eine erste Höhe und/oder eine erste Größe hat.

Nach Zusammenbau des Zusatzkörpers 13 und des Grundkörpers 11 beziehungsweise der Wandungsabschnitte 34, 35 ist der Zusatzkörper 13 beziehungsweise der zweite Wandungsabschnitt 35 relativ zu dem Grundkörper 11 beziehungsweise dem zweiten Wandungsabschnitt 35 in einer ersten Position fixiert. Diese Position hängt von der Höhe und/oder Größe der ersten Erhebung 36.1 sowie von der Höhe und/oder Größe der dritten Erhebung 36.3 ab.

In der FIG. 12 ist das zweite Distanzstück 22.2 in der zweiten Variante dargestellt, bei der an jedem Querschenkel 32 die erste Erhebung 36.1 so hoch und/oder so groß wie die zweite Erhebung 36.2 ist und die dritte Erhebung 36.3 eine zweite Höhe und/oder eine zweite Größe hat. Im Vergleich zu der ersten Variante sind die ersten Erhebungen 36.1 niedriger und/oder kleiner und die zweiten Erhebungen 36.2 höher und/oder größer. Die zweite Höhe ist kleiner als die erste Höhe und/oder die zweite Größe ist kleiner als die erste Größe.

Nach Zusammenbau des Zusatzkörpers 13 und des Grundkörpers 11 beziehungsweise der Wandungsabschnitte 34, 35 ist der Zusatzkörper 13 beziehungsweise der zweite Wandungsabschnitt 35 relativ zu dem Grundkörper 11 beziehungsweise dem zweiten Wandungsabschnitt 35 in einer zweiten Position fixiert. Diese Position hängt von der Höhe und/oder der Größe der ersten Erhebung 36.1 sowie von der Höhe und/oder der Größe der dritten Erhebung 36.3 ab. In dieser Position ist im Vergleich zu der ersten Position der zweite Oberflächenabschnitt 14 gegen die x-Richtung relativ zu dem ersten Oberflächenabschnitt 12 verschoben, sodass der zweite Oberflächenabschnitt 14 bezogen auf die x-Achse näher bei dem ersten Oberflächenabschnitt 12 liegt, und in die z-Richtung relativ zu dem ersten Oberflächenabschnitt 12 verschoben.

In der FIG. 13 ist das dritte Distanzstück 22.3 in der dritten Variante dargestellt, bei der an jedem Querschenkel 32 die erste Erhebung 36.1 niedriger und/oder kleiner als die zweite Erhebung 36.2 ist und die dritte Erhebung 36.3 eine dritte Höhe gleich Null und/oder eine dritte Größe gleich Null hat. Im Vergleich zu der zweiten Variante sind die ersten Erhebungen 36.1 niedriger und/oder kleiner und die zweiten Erhebungen 36.2 höher und/oder größer. Die dritte Höhe ist kleiner als die zweite Höhe und/oder die dritte Größe ist kleiner als die zweite Größe.

Nach Zusammenbau des Zusatzkörpers 13 und des Grundkörpers 11 beziehungsweise der Wandungsabschnitte 34, 35 ist der Zusatzkörper 13 beziehungsweise der zweite Wandungsabschnitt 35 relativ zu dem Grundkörper 11 beziehungsweise dem zweiten Wandungsabschnitt 35 in einer dritten Position fixiert. Diese Position hängt von der Höhe und/oder der Größe der ersten Erhebung 36.1 sowie von der Höhe und/oder der Größe der dritten Erhebung 36.3 ab. In dieser Position ist im Vergleich zu der zweiten Position der zweite Oberflächenabschnitt 14 gegen die x-Richtung relativ zu dem ersten Oberflächenabschnitt 12 verschoben, sodass der zweite Oberflächenabschnitt 14 bezogen auf die x-Achse näher bei dem ersten Oberflächenabschnitt 12 liegt, und in die z-Richtung relativ zu dem ersten Oberflächenabschnitt 12 verschoben.

Da der Grundkörper 11 beziehungsweise der erste Wandungsabschnitt 34 durch Spritzgießen aus thermoplastischem Kunststoff einstückig mit den Distanzstücken 22 hergestellt sind, kann beispielsweise ausgehend von der zweiten Variante die erste Variante einfach hergestellt werden, indem im Bereich der ersten Erhebungen 36.1 und der dritten Erhebungen 36.3 Material der für das Spitzgießen verwendeten Gießform abgetragen und im Bereich der zweiten Erhebungen 36.2 Material auf die Gießform aufgebracht wird, und kann beispielsweise ausgehend von der zweiten Variante die dritte Variante einfach hergestellt werden, indem im Bereich der ersten Erhebungen 36.1 und der dritten Erhebungen 36.3 Material auf die Gießform aufgebracht und im Bereich der zweiten Erhebungen 36.2 Material der Gießform abgetragen wird.

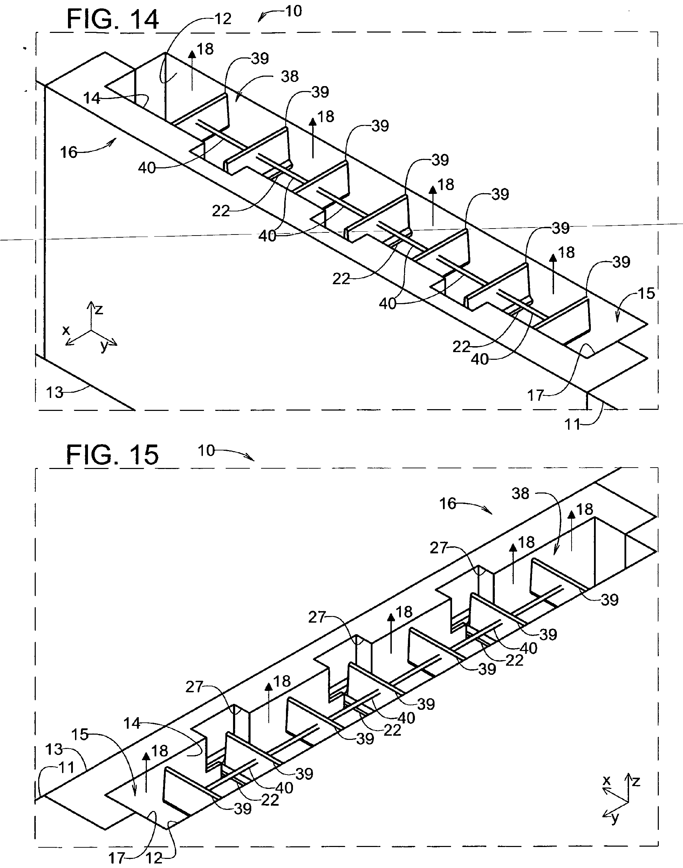

In der FIG. 14, der FIG. 15 und der FIG. 16 ist eine sechste Ausführungsform des Innenverkleidungsteils 10 schematisch dargestellt. Diese Ausführungsform ähnelt der fünften Ausführungsform, sodass im Folgenden vor Allem die Unterschiede näher erläutert werden.

Bei dieser Ausführungsform weist das Innenverkleidungsteil 10 zusätzlich eine Lamelleneinheit 38 mit sieben Lamellen 39 zum Leiten des Luftstroms 18 auf, der durch den Mündungsabschnitts-Öffnung 15 zu der Mündungsabschnitt 17 strömt. Die Lamelleneinheit 38 ist an dem Grundkörper 11 und dem Zusatzkörper 13 auf nachstehend beschriebene Weise derart angebracht, dass die Lamellen 39 vollständig in dem Mündungsabschnitts-Öffnung 15 liegen und sich von dem ersten Oberflächenabschnitt 12 zu dem zweiten Oberflächenabschnitt 14 erstrecken.

Bei dieser Ausführungsform sind die Lamellen 39 in gleichen Abständen bezogen auf die y-Achse nebeneinander angeordnet und weist die Lamelleneinheit 38 sechs zur y-Achse parallele Verbindungsstäbe 40 auf, die jeweils zwischen zwei benachbarten Lamellen 39 liegen und diese miteinander verbinden. Die Lamelleneinheit 38 ist als ein separates Bauteil unabhängig von Grundkörper 11 und Zusatzkörper 13 durch Spritzgießen aus thermoplastischem Kunststoff hergestellt, und die Lamellen 39 sind stoffschlüssig durch einstückiges Urformen beim Spritzgießen der Lamelleneinheit 38 an die Verbindungsstäbe 40 gekoppelt.

Bei dieser Ausführungsform haben drei der Lamellen 39 bezogen auf die y-Achse die gleich Position wie die drei Distanzstücke 22 und stützen sich auf nachstehend beschriebene Weise auf jenen ab.

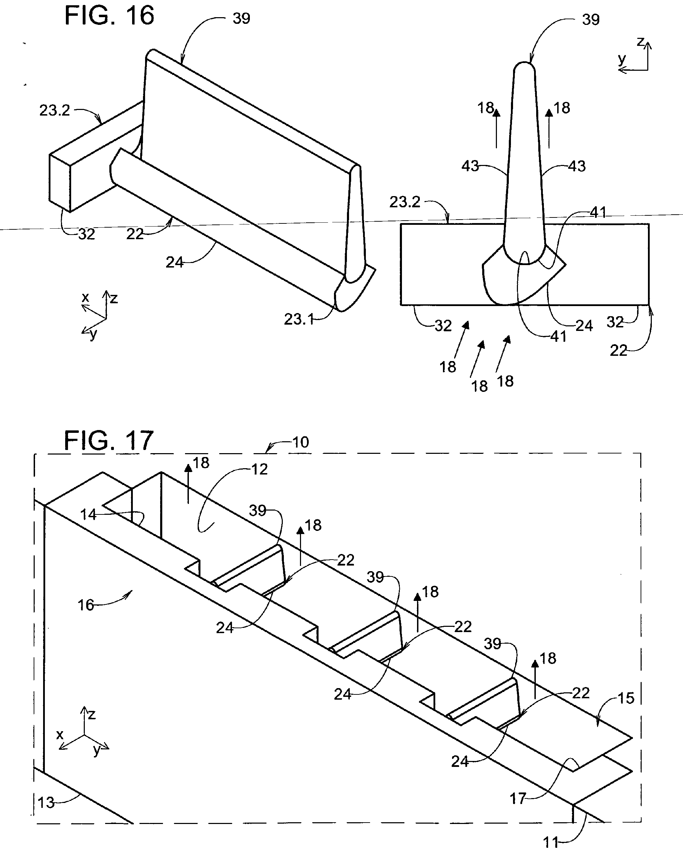

In der FIG. 16 ist eine der drei Lamellen 39 zusammen mit dem zugeordneten Distanzstück 22 separat dargestellt. Diese Lamelle 39 liegt mit einem gegen die z-Richtung weisenden, stromaufwärtigen Flächenbereich 41 an einem in die z-Richtung weisenden, stromabwärtigen Flächenbereich 42 des Mittelabschnitts 24 dieses Distanzstücks 22 an. Der Querschnitt der Lamelle 39 ist im Bereich des stromaufwärtigen Flächenbereichs 41 teilkreisförmig konvex ausgebildet, und der Querschnitt des Mittelabschnitts 24 ist hierzu passend im Bereich des stromabwärtigen Flächenbereichs 42 teilkreisförmig konkav ausgebildet. Die Lamelle 39 und der Mittelabschnitt 24 sind an den Flächenbereichen 41, 42 miteinander verklebt, wodurch die Lamelleneinheit 38 an die Körper 11, 13 gekoppelt ist.

Des Weiteren ist der Querschnitt des Mittelabschnitts 24 aerodynamisch an den Querschnitt der Lamelle 39 angepasst, indem seine an den stromaufwärtigen Flächenbereich 41 angerenzenden Flächenbereiche eben ausgebildet sind und in stumpfem Winkel zu den an den stromabwärtigen Flächenbereich 42 angerenzenden seitlichen Flächenbereichen 43 der Lamelle 39 liegen. Außerdem ist hier die konvex gekrümmte Unterseite des Mittelabschnitts 24 nicht symmetrisch bezogen auf die durch die Längsachse der Lamelle 39 gehende x-z-Ebene, sondern in y-Richtung verformt in Hinblick auf einen Luftstrom 18, der die Lamelle 39 schräg von links unten beziehungsweise schräg gegen die y-Richtung und in die z-Richtung anströmt.

In der FIG. 17, der FIG. 18 und der FIG. 19 ist eine siebente Ausführungsform des Innenverkleidungsteils 10 schematisch dargestellt. Diese Ausführungsform ähnelt der fünften Ausführungsform, sodass im Folgenden vor Allem die Unterschiede näher erläutert werden.

Bei dieser Ausführungsform weist das Innenverkleidungsteil 10 drei Lamellen 39 zum Leiten des Luftstroms 18 auf, der durch den Mündungsabschnitts-Öffnung 15 zu dem Mündungsabschnitt 17 strömt. Die Lamellen 39 sind in gleichen Abständen bezogen auf die y-Achse nebeneinander angeordnet und an dem Grundkörper 11 und dem Zusatzkörper 13 auf nachstehend beschriebene Weise derart angebracht, dass die Lamellen 39 vollständig in dem Mündungsabschnitts-Öffnung 15 liegen und sich von dem ersten Oberflächenabschnitt 12 zu dem zweiten Oberflächenabschnitt 14 erstrecken.

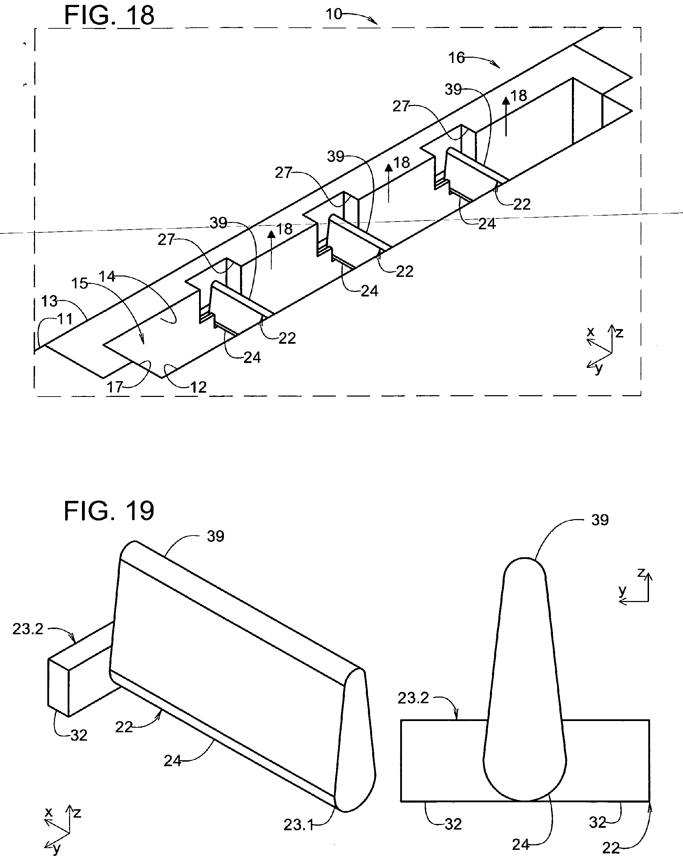

In der FIG. 19 ist eines der drei Distanzstücke 22 beziehungsweise eine der drei Lamellen 39 separat dargestellt. Bei dem Distanzstück 22 ist der Mittelabschnitt 24 als Lamelle 39 ausgebildet.

Da somit die Lamelle 39 durch die Mittelabschnitt 24 gebildet wird und das Distanzstück 22 auf die vorstehend erläuterte Weise an die Körper 11, 13 gekoppelt ist, sind auch die Lamellen 39 an die Körper 11, 13 gekoppelt beziehungsweise an den Körpern 11, 13 angebracht.

## Patentansprüche

1. Kanalkörper (1) zur Belüftung eines Innenraums (IR) eines Fahrzeugs, aufweisend:
einen Mündungsabschnitt (17), aufweisend einen ersten Wandungsabschnitt (34) mit einem ersten Oberflächenabschnitt (12) und einen zweiten Wandungsabschnitt (35) mit einem zweiten Oberflächenabschnitt (14), wobei die Oberflächenabschnitte (12, 14) in Bezug auf ein kartesisches Koordinatensystem mit einer X-, einer Y- und einer Z-Richtung in der X-Richtung gegenüber liegend angeordnet sind und wobei der Mündungsabschnitt (17) einen entlang der Z-Richtung verlaufenden Kanalabschnitt (K) umgrenzt, der in Z-Richtung mit einem Öffnungsbereich (15) von dem Kanalabschnitt (K) ausmündet,
eine in dem zweiten Wandungsabschnitt (35) ausgebildete Ausnehmung (27), die gebildet ist durch: zwei in der X-Richtung einander gegenüber liegende Ausnehmungs-Längsflächen (29.1, 29.2), zwei in der Y-Richtung einander gegenüber liegende Ausnehmungs-Stirnflächen (29.3, 29.4), eine die Ausnehmung (27) entgegen gesetzt zur Z-Richtung begrenzende Bodenfläche (29.5),
eine sich in der Z-Richtung erstreckende Lageröffnung (28), durch die sich die Ausnehmung (27) zum Kanalabschnitt (K) hin öffnet und die in der Y-Richtung mit einer Breite ausgebildet ist, dass einander zugewandte Lagerflächen (28.1, 28.2) die Lageröffnung (28) bilden, wobei die Ausnehmung (27) unter Ausbildung einer sich in der X-Richtung und der Y-Richtung erstreckenden Stirnwand-Öffnung (27b) des zweiten Wandungsabschnitts (35) in der Z-Richtung offen ist,
wenigstens ein Distanzstück (22), das aufweist: jeweils einen ersten Endabschnitt (23.1), der an den ersten Oberflächenabschnitt (12) des ersten Wandungsabschnitts (34) gekoppelt ist, einen zweiten Endabschnitt (23.2), der in der Ausnehmung (27) gelegen ist, und einen zwischen den beiden Endabschnitten (23.1, 23.2) gelegenen und sich in einer Längsrichtung (L_{S}) erstreckenden Mittelabschnitt (24), der einen der Breite des Mündungsabschnitts (17) entsprechenden Abstand zwischen den Oberflächenabschnitten (12, 14) überbrückt und durch die Lageröffnung (28) ragt, um einen durch die Länge des Distanzstücks (22) bestimmten Mindestabstand zwischen den einander gegenüber liegenden Oberflächenabschnitten (12, 14) einzurichten, wobei der zweite Endabschnitt (23.2) gegenüber dem Mittelabschnitt (24) als Verbreiterung quer zur Y-Richtung gebildet ist und sich in einer quer zur Mittelabschnitt-Längsrichtung (L_{S}) verlaufenden Querrichtung (L1) von dem Mittelabschnitt (24) aus erstreckt, wobei die Ausnehmung (27) derart ausgeführt ist, dass diese den zweiten Endabschnitt (23.2) formschlüssig aufnimmt oder den zweiten Endabschnitt (23.2) mit einem Spiel aufnimmt oder mit dem zweiten Endabschnitt (23.2) eine Presspassung bildet.

2. Kanalkörper (1) zur Belüftung eines Innenraums (IR) eines Fahrzeugs, aufweisend:
einen ersten Wandungsabschnitt (34) mit einem ersten Oberflächenabschnitt (12) und einen zweiten Wandungsabschnitt (35) mit einem zweiten Oberflächenabschnitt (14), wobei die Oberflächenabschnitte (12, 14) in Bezug auf ein kartesisches Koordinatensystem mit einer X-, einer Y- und einer Z-Richtung in der X-Richtung gegenüber liegend angeordnet sind und einen in der Z-Richtung verlaufenden Kanalabschnitt (K) mit einem Mündungsabschnitt (17) umgrenzen, der in Z-Richtung mit einem Öffnungsbereich (15) von dem Kanalabschnitt (K) ausmündet,
eine in dem zweiten Wandungsabschnitt (35) ausgebildete Ausnehmung (27), die gebildet ist durch: zwei in der X-Richtung einander gegenüber liegende Ausnehmungs-Längsflächen (29.1, 29.2), zwei in der Y-Richtung einander gegenüber liegende Ausnehmungs-Stirnflächen (29.3, 29.4), eine die Ausnehmung (27) entgegen gesetzt zur Z-Richtung begrenzende Bodenfläche (29.5),
eine sich in der Z-Richtung erstreckende Lageröffnung (28), durch die sich die Ausnehmung (27) zum Kanalabschnitt (K) hin öffnet und die in der Y-Richtung mit einer Breite ausgebildet ist, dass einander zugewandte Lagerflächen (28.1, 28.2) die Lageröffnung (28) bilden, wobei die Ausnehmung (27) sich nicht in der Z-Richtung im zweiten Wandungsabschnitt (35) öffnet und die Lageröffnung (28) in der Z-Richtung gesehen in eine Seitenöffnung übergeht, durch die sich die Ausnehmung (27) zum Kanalabschnitt (K) hin öffnet,
wenigstens ein Distanzstück (22), das aufweist: jeweils einen ersten Endabschnitt (23.1), der an den ersten Oberflächenabschnitt (12) des ersten Wandungsabschnitts (34) gekoppelt ist, einen zweiten Endabschnitt (23.2), der in der Ausnehmung (27) gelegen ist und einen zwischen den beiden Endabschnitten (23.1, 23.2) gelegenen und sich in einer Mittelabschnitt-Längsrichtung (L_{S}) erstreckenden Mittelabschnitt (24), der einen der Breite des Mündungsabschnitts (17) entsprechenden Abstand zwischen den Oberflächenabschnitten (12, 14) überbrückt und durch die Lageröffnung (28) ragt, um einen durch die Länge des Distanzstück (22) bestimmten Mindestabstand zwischen den einander gegenüber liegenden Oberflächenabschnitten (12, 14) einzurichten, wobei der zweite Endabschnitt (23.2) gegenüber dem Mittelabschnitt (24) als Verbreiterung quer zur Y-Richtung gebildet ist und sich in einer quer zur Mittelabschnitt-Längsrichtung (L_{S}) verlaufenden Querrichtung (L1) von dem Mittelabschnitt (24) aus erstreckt, wobei die Seitenöffnung derart gebildet ist, dass durch diese der zweite Endabschnitt (23.2) mit seiner Verbreiterung, die sich in der quer zur Mittelabschnitt-Längsrichtung (L_{S}) verlaufenden Querrichtung (L1) erstreckt, in die Seitenöffnung einführbar ist,
wobei die Ausnehmung (27) derart ausgeführt ist, dass diese den zweiten Endabschnitt (23.2) formschlüssig aufnimmt oder den zweiten Endabschnitt (23.2) mit einem Spiel aufnimmt oder mit dem zweiten Endabschnitt (23.2) eine Presspassung bildet.

3. Kanalkörper (1) nach dem Anspruch 1 oder 2, wobei der zweite Endabschnitt (23.2) plattenförmig gebildet ist und sich in einer quer zur Mittelabschnitt-Längsrichtung (L_{S}) verlaufenden Querrichtung (L1) von dem Mittelabschnitt (24) aus erstreckt.

4. Kanalkörper (1) nach einem der voranstehenden Ansprüche, wobei die einander zugewandten Lagerflächen (28.1, 28.2) der Lageröffnung (28) derart gebildet sind, dass die Lagerflächen (28.1, 28.2) mit dem am zweiten Endabschnitt (23.2) gelegenen Abschnitt des Mittelabschnitts (24) eine Presspassung bilden.

5. Kanalkörper (1) nach einem der voranstehenden Anspruch, wobei sich an den ersten Wandungsabschnitt (34) eine sich quer zu diesem erstreckende Stirnwand (34b) anschließt, die ein sich flächig erstreckendes Trägerteil eines Innenverkleidungsteils ist.

6. Kanalkörper (1) nach einem der vorherigen Ansprüche, wobei das Distanzstück (22) durch die Lageröffnung (28) ragt und mit dem zweiten Endabschnitt (23.2) derart in der Ausnehmung (27) sitzt, dass die erste Stirnfläche (30.1) an der ersten Anlagefläche (29.1) und die zweite Stirnfläche (30.2) an der zweiten Anlagefläche (29.2) anliegt.

7. Kanalkörper (1) nach dem vorherigen Anspruch, wobei:
das Distanzstück (22) einen Längsschenkel (31), der an einem Ende an den ersten Oberflächenabschnitt (12) gekoppelt ist, und einen Querschenkel (32) aufweist, der von dem anderen Ende des Längsschenkels (31) quer absteht;
die Stirnflächen (30.1, 30.2) an dem Querschenkel (32) ausgebildet sind.

8. Kanalkörper (1) nach dem vorherigen Anspruch, wobei:
der Querschenkel (32) auf seiner zu der ersten Anlagefläche (29.1) weisenden Seite eine Erhebung (36.1) aufweist, an der die erste Stirnfläche (30.1) ausgebildet ist; und/oder
der Querschenkel (32) auf seiner zu der zweiten Anlagefläche (29.2) weisenden Seite eine Erhebung (36.2) aufweist, an der die zweite Stirnfläche (30.2) ausgebildet ist.

9. Kanalkörper (1) nach einem der Ansprüche 6 bis 8, wobei:
die Ausnehmung (27) eine Zugangsöffnung (33) aufweist, die in einem Flächenbereich des zweiten Wandungsabschnitts (35) ausgebildet ist;
die Lageröffnung (28) schlitzartig bis zur Zugangsöffnung (33) verläuft.

10. Kanalkörper (1) nach einem der voranstehenden Ansprüche, zusätzlich aufweisend: eine Lamelleneinheit (38) mit wenigstens zwei Lamellen (39) zum Leiten eines Luftstroms (18), der durch den Öffnungsbereich (15) zu dem Mündungsabschnitt (17) strömt; wobei: die Lamelleneinheit (38) an wenigstens einem der Wandungsabschnitte (34, 35) derart angebracht ist, dass die Lamellen (39) zumindest teilweise in dem Öffnungsbereich (15) liegen und sich von dem ersten (12) zu dem zweiten Oberflächenabschnitt (14) erstrecken.

11. Kanalkörper (1) nach einem der voranstehenden Ansprüche, wobei bei wenigstens einem der Distanzstücke (22) der Mittelabschnitt (24) als Lamelle (39) zum Leiten eines Luftstroms (18), der durch den Öffnungsbereich (15) zu dem Mündungsabschnitt (17) strömt, ausgebildet ist.

12. Kanalkörper (1) nach einem der voranstehenden Ansprüche, zusätzlich aufweisend: wenigstens eine Lamelle (39) zum Leiten eines Luftstroms (18), der durch den Öffnungsbereich (15) zu dem Mündungsabschnitt (17) strömt; wobei: die Lamelle (39) mit einem stromaufwärtigen Flächenbereich (41) an einem stromabwärtigen Flächenbereich (42) des Mittelabschnitts (24) eines der Distanzstücke (22) anliegt.

13. Kanalkörper (1) nach dem vorherigen Anspruch, wobei der Querschnitt des Mittelabschnitts (24) aerodynamisch an den Querschnitt der Lamelle (39) angepasst ist.

14. Kanalkörper (1) nach einem der voranstehenden Ansprüche, wobei der erste Wandungsabschnitt (34) durch Druckgießen oder Spritzgießen hergestellt ist und/oder der zweite Wandungsabschnitt (35) durch Druckgießen oder Spritzgießen hergestellt ist.

## Claims

1. Channel body (1) for ventilating an interior (IR) of a vehicle, comprising:
an orifice section (17) comprising a first wall section (34) with a first surface section (12) and a second wall section (35) with a second surface section (14), wherein the surface sections (12, 14) are arranged, with regard to a Cartesian coordinate system with a X-direction, a Y-direction and a Z-direction, opposite to each other in the X-direction, and wherein the orifice section (17) defines a channel section (K) which extends along the Z-direction and which opens from the channel section (K) with an opening section (Z),
a recess (27) formed in the second wall section (35), which is formed by: two recess longitudinal surfaces (29.1, 29.2) which lie opposite each other in the X-direction, two recess end faces (29.3, 29.4), a bottom surface (29.5) which limits the recess (27) opposite to the Z-direction,
a bearing opening (28) which extends in the Z-direction, wherein through the bearing opening (28) the recess (27) opens towards the channel section (K) and wherein the bearing opening (28) is formed in the Y-direction with a width that bearing surfaces (28.1, 28.2) which face each other form the bearing opening (28), wherein the recess (27) is open in the Z-direction by forming an end wall opening (27b) of the second wall section (35), wherein the end wall opening (27b) extends in the X-direction and the Y-direction,
at least one spacer (22), each comprising: a first end section (23.1) which is coupled to the first surface section (12) of the first wall section (34), a second end section (23.2) which is located in the recess (27) and a central section (24) which is located between the two end sections (23.1, 23.2) located and which extends in a longitudinal direction (L_{S}), wherein the central section (24) bridges a distance between the surface sections (12, 14) corresponding the width of the orifice section (17) and protrudes through the bearing opening (28) to establish a minimum distance between the opposing surface sections (12, 14), wherein the minimum distance is determined by the length of the spacer (22), wherein the second end section (23.2) is formed as broadening transverse to the Y-direction and extends from the central section (24) in a transverse direction (L1) which extends transverse to the central section longitudinal direction (L_{S}), wherein the recess (27) is designed such that it receives the second end section (23.2) positively or receives the second end section (23.2) with a play or forms an interference fit with the second end section (23.2).

2. Channel body (1) for ventilating an interior (IR) of a vehicle, comprising:
a first wall section (34) with a first surface section (12) and a second wall section (35) with a second surface section (14), wherein the surface sections (12, 14) are arranged, with regard to a Cartesian coordinate system with a X-direction, a Y-direction and a Z-direction, opposite to each other in the X-direction, and wherein the surface sections (12, 14) define a channel section (K) with an orifice section (17) which opens with an opening section (15) from the channel section (K),
a recess (27) formed in the second wall section (35), which is formed by: two recess longitudinal surfaces (29.1, 29.2) which lie opposite each other in the X-direction, two recess end faces (29.3, 29.4), a bottom surface (29.5) which limits the recess (27) opposite to the Z-direction,
a bearing opening (28) which extends in the Z-direction, wherein through the bearing opening (28) the recess (27) opens towards the channel section (K) and wherein the bearing opening (28) is formed in the Y-direction with a width that bearing surfaces (28.1, 28.2) which face each other form the bearing opening (28), wherein the recess (27) does not open in the Z-direction in the second wall section (35) and wherein the bearing opening (28) turns in a side opening when seen in the Z-direction as seen passes, through which the recess (27) opens towards the channel section (K), at least one spacer (22), each comprising: a first end section (23.1) which is coupled to the first surface section (12) of the first wall section (34), a second end section (23.2) which is located in the recess (27) and a central section (24) which is located between the two end sections (23.1, 23.2) located and which extends in a longitudinal direction (L_{S}), wherein the central section (24) bridges a distance between the surface sections (12, 14) corresponding the width of the orifice section (17) and protrudes through the bearing opening (28) to establish a minimum distance between the opposing surface sections (12, 14), wherein the minimum distance is determined by the length of the spacer (22), wherein the second end section (23.2) is formed as broadening transverse to the Y-direction and extends from the central section (24) in a transverse direction (L1) which extends transverse to the central section longitudinal direction (L_{S}), wherein the side opening is formed such that through the same the second end section (23.2) with its broadening, which extends in the transverse direction (L1) which extends transverse to the central section longitudinal direction (L_{S}), can be inserted into the side opening, wherein the recess (27) is designed such that it receives the second end section (23.2) positively or receives the second end section (23.2) with a play or forms an interference fit with the second end section (23.2).

3. Channel body (1) according to claim 1 or 2, wherein the second end section (23.2) is formed plate-shaped and extends from the central section (24) in a transverse direction (L1) which extends transverse to the central section longitudinal direction (L_{S}).

4. Channel body (1) according to one of the preceding claims, wherein the bearing surfaces (28.1, 28.2) of the bearing opening (28) which face each other are formed such that the bearing surfaces (28.1, 28.2) form a press fit with the section of the central section (24) which is located at the second end section (23.2).

5. Channel body (1) according to one of the preceding claims, wherein an end wall (34b) adjoins the first wall section (34), wherein an end wall (34b) extends transversely to the first wall section (34) and is a flat extending support member of an interior trim part.

6. Channel body (1) according to one of the preceding claims, wherein the spacer (22) protrudes through the bearing opening (28) and sits with the second end section (23.2) in the recess (27) such that the first end face (30.1) butts against the first contact surface (29.1) and the second end face (30.2) butts against the second contact surface (29.2).

7. Channel body (1) according to the previous claim, wherein:
the spacer (22) comprises a longitudinal leg (31) which is coupled at one end to the first surface section (12) and comprises a transverse leg (32) which projects transversely from the other end of the longitudinal leg (31);
the end faces (30.1, 30.2) are formed on the transverse leg (32).

8. Channel body (1) according to the previous claim, wherein:
the transverse leg (32) comprises on its side facing the first contact surface (29.1) a projection (36.1) on which the first end face (30.1) is formed; and/or
the transverse leg (32) comprises on its side facing the second contact surface (29.2) a projection (36.2) on which the second end face (30.2) is formed.

9. Channel body (1) according to any one of claims 6 to 8, wherein:
the recess (27) comprises an access opening (33) which is formed in a surface area of the second wall section (35);
the bearing opening (28) extends to the access opening (33) in a slot-shaped manner.

10. Channel body (1) according to any one of the preceding claims, further comprising: a fin unit (38) with at least two fins (39) for guiding an air flow (18) which flows through the opening section (15) to the orifice section (17); wherein: the fin unit (38) is disposed on at least one of the wall sections (34, 35) such that the fins (39) lie at least partially within the opening section (15) and extend from the first (12) to the second surface section (14).

11. Channel body (1) according to one of the preceding claims, wherein the middle section (24) of at least one of the spacers (22) is formed as a lamella (39) for directing an air flow (18) which flows through the opening section (15) to the orifice section (17).

12. Channel body (1) according to any one of the preceding claims, further comprising: at least one fin (39) for guiding an air flow (18) which flows through the opening section (15) to the orifice section (17); wherein: the fin (39) abuts with an upstream surface section (41) on a downstream surface section (42) of the central section (24) of one of the spacers (22).

13. Channel body (1) according to the preceding claim, wherein the cross section of the central section (24) is aerodynamically adapted to the cross section of the lamella (39).

14. Channel body (1) according to one of the preceding claims, wherein the first wall section (34) is produced by die casting or injection molding and/or the second wall section (35) is produced by die casting or injection molding.

## Revendications

1. Corps de canal (1) pour aérer un intérieur (IR) d'un véhicule, comprenant :
une partie d'embouchure (17), comprenant une première partie de paroi (34) avec une première partie de surface (12) et une deuxième partie de paroi (35) avec une deuxième partie de surface (14), où les parties de surface (12, 14) sont arrangées par rapport à un système de coordonnées cartésiennes avec une direction X, Y et Z de manière opposée dans la direction X et où la partie d'embouchure (17) délimite une partie de canal (K) s'étendant dans la direction Z qui débouche dans la direction Z avec une région d'ouverture (15) de la partie de canal (K),
une encoche (27) adaptée dans la deuxième partie de paroi (35) formée par : deux surfaces longitudinales d'encoche (29.1, 29.2) opposées dans la direction X, deux surfaces frontales d'encoche (29.3, 29.4) opposées dans la direction Y, une surface de sol (29.5) délimitant l'encoche (27) de manière opposée à la direction Z,
une ouverture de palier (28) s'étendant dans la direction Z à travers de laquelle l'encoche (27) s'ouvre vers la partie de canal (K) et qui est adaptée dans la direction Y avec une largeur de sorte que des surfaces de palier (28.1, 28.2) en vis-à-vis forment l'ouverture de palier (28), l'encoche (27) étant ouverte dans la direction Z en formant une ouverture de paroi frontale (27b) de la deuxième partie de paroi (35) s'étendant dans la direction X et dans la direction Y,
au moins une entretoise (22) comprenant : une première partie d'extrémité (23.1) respective accouplée à la première partie de surface (12) de la première partie de paroi (34), une deuxième partie d'extrémité (23.2) située dans l'encoche (27) et une partie centrale (24) située entre les deux parties d'extrémité (23.1, 23.2) et s'étendant dans une direction longitudinale (LS) comblant une distance entre les parties de surface (12, 14) correspondant à la largeur de la partie d'embouchure (17) et qui fait saillie à travers l'ouverture de palier (28) pour réaliser une distance minimale déterminée par la longueur de l'entretoise (22) entre les parties de surface (12, 14) opposées, la deuxième partie d'extrémité (23.2) étant formée opposée à la partie centrale (24) en tant qu'élargissement transversale au sens Y s'étendant de la partie centrale (24) dans une direction transversale (L1), transversale à la direction longitudinale de la partie centrale (L_{S}), l'encoche (27) étant adaptée de sorte qu'elle reçoit la deuxième partie d'extrémité (23.2) par un assemblage par forme, ou reçoit la deuxième partie d'extrémité (23.2) avec un jeu ou forme un ajustement serré avec la deuxième partie d'extrémité (23.2).

2. Corps de canal (1) pour aérer un intérieur (IR) d'un véhicule, comprenant:
une première partie de paroi (34) avec une première partie de surface (12) et une deuxième partie de paroi (35) avec une deuxième partie de surface (14), où les parties de surface (12, 14) sont arrangées par rapport à un système de coordonnées cartésiennes avec une direction X, Y et Z de manière opposée dans la direction X et délimitent une partie de canal (K) s'étendant dans la direction Z qui débouche dans la direction Z avec une région d'ouverture (15) de la partie de canal (K),
une encoche (27) adaptée dans la deuxième partie de paroi (35) formée par : deux surfaces longitudinales d'encoche (29.1, 29.2) opposées dans la direction X, deux surfaces frontales d'encoche (29.3, 29.4) opposées dans la direction Y, une surface de sol (29.5) délimitant l'encoche (27) de manière opposée au sens Z,
une ouverture de palier (28) s'étendant dans la direction Z à travers de laquelle l'encoche (27) s'ouvre vers la partie de canal (K) et qui est adaptée dans la direction Y avec une largeur de sorte que des surfaces de palier (28.1, 28.2) en vis-à-vis forment l'ouverture de palier (28), l'encoche (27) ne s'ouvrant pas dans la direction Z dans la deuxième partie de paroi (35) et l'ouverture de palier (28) fusionnant dans une ouverture latérale, vue dans la direction Z, par laquelle l'encoche s'ouvre vers la partie de canal (K),
au moins une entretoise (22) comprenant : une première partie d'extrémité respective (23.1) accouplée à ladite première partie de surface (12) de ladite première partie de paroi (34), une deuxième partie d'extrémité (23.2) située dans ladite encoche (27) et une partie centrale (24) située entre les deux parties d'extrémité (23.1, 23.2) et s'étendant dans une direction longitudinale de la partie centrale (L_{S}) franchissant une distance entre lesdites parties de surface (12, 14) correspondant à la largeur de ladite partie d'embouchure (17) et faisant saillie à travers ladite ouverture de palier (28) pour établir une distance minimale, déterminée par la longueur de ladite entretoise (22), entre lesdites parties de surface opposées (12, 14), ladite deuxième partie d'extrémité (23.2) étant formée par rapport à la partie centrale (24) en tant qu'élargissement transversale à la direction Y et s'étendant depuis la partie centrale (24) dans une direction transversale (L1), s'étendant transversalement à la direction longitudinale de la partie centrale (L_{S}), l'ouverture latérale étant formée de telle sorte que grâce à elle la deuxième partie d'extrémité (23.2) peut être introduite dans l'ouverture latérale par son élargissement qui s'étend dans la direction transversale (L1), s'étendant transversalement à la direction longitudinale de la partie centrale (L_{S}),
l'encoche (27) étant conçue de telle sorte qu'elle reçoit la deuxième partie d'extrémité (23.2) par un assemblage par forme ou reçoit la deuxième partie d'extrémité (23.2) avec un jeu ou forme un ajustement serré avec la deuxième partie d'extrémité (23.2).

3. Corps de canal (1) selon la revendication 1 ou 2, où la deuxième partie d'extrémité (23.2) est en forme de plaque et s'étend depuis la partie centrale (24) dans une direction transversale (L1), s'étendant transversalement à la direction longitudinale de la partie centrale (L_{S}).

4. Corps de canal (1) selon l'une des revendications précédentes, où les surfaces de palier en vis-à-vis (28.1, 28.2) de l'ouverture de palier (28) sont formées de telle sorte que les surfaces de palier (28.1, 28.2) forment un ajustement serré avec la partie de la partie centrale (24) située à la deuxième partie d'extrémité (23.2).

5. Corps de canal (1) selon l'une des revendications précédentes, où une paroi frontale (34b) se raccorde à la première partie de paroi (34), s'étendant transversalement à celle-ci, ladite paroi d'extrémité étant une partie de support d'une partie de revêtement intérieur s'étendant de façon plane.

6. Corps de canal (1) selon l'une des revendications précédentes, où l'entretoise (22) fait saillie à travers l'ouverture de palier (28) et repose avec la deuxième partie d'extrémité (23.2) dans l'encoche (27) de telle sorte que la première surface frontale (30.1) repose contre la première surface d'appui (29.1) et la deuxième surface frontale (30.2) repose contre la deuxième surface d'appui (29.2).

7. Corps de canal (1) selon la revendication précédente, où :
l'entretoise (22) comprend une branche longitudinale (31) accouplée à une extrémité à la première partie de surface (12) et une branche transversale (32) faisant saillie transversalement de l'autre extrémité de la branche longitudinale (31) ;
les surfaces frontales (30.1, 30.2) sont adaptées sur la branche transversale (32).

8. Corps de canal (1) selon la revendication précédente, où :
la branche transversale (32) présente, sur son côté tourné vers la première surface d'appui (29.1), une partie élevée (36.1) sur laquelle la première surface frontale (30.1) est formée;
et/ou
la branche transversale (32) présente, sur son côté tourné vers la deuxième surface d'appui (29.2), une partie élevée (36.2) sur laquelle la deuxième surface frontale (30.2) est formée.

9. Corps de canal (1) selon l'une quelconque des revendications 6 à 8, où :
l'encoche (27) présente une ouverture d'accès (33) qui est formée dans une région de surface de la deuxième partie de paroi (35);
l'ouverture de palier (28) s'étend en forme de fente jusqu'à l'ouverture d'accès (33).

10. Corps de canal (1) selon l'une des revendications précédentes, comprenant en outre : une unité à lamelles (38) ayant au moins deux lamelles (39) pour diriger un flux d'air (18) qui s'écoule à travers la région d'ouverture (15) vers la partie d'embouchure (17) ; où : l'unité à lamelles (38) est fixée à au moins une des parties de paroi (34, 35) de sorte que les lamelles (39) reposent au moins partiellement dans la région d'ouverture (15) et s'étendent de la première partie (12) vers la deuxième partie de surface (14).

11. Corps de canal (1) selon l'une des revendications précédentes, où, dans au moins l'une des entretoises (22), la partie centrale (24) est réalisée sous la forme d'une lamelle (39) pour diriger un flux d'air (18) qui s'écoule à travers la région d'ouverture (15) vers la partie d'embouchure (17).

12. Corps de canal (1) selon l'une des revendications précédentes, comprenant en outre : au moins une lamelle (39) pour diriger un flux d'air (18) qui s'écoule à travers la région d'ouverture (15) vers la partie d'embouchure (17) ; où : la lamelle (39) est en appui avec une région de surface amont (41) contre une région de surface aval (42) de la partie centrale (24) de l'une des entretoises (22).

13. Corps de canal (1) selon la revendication précédente, où la partie transversale de la partie centrale (24) est adaptée de manière aérodynamique à la partie transversale de la lamelle (39).

14. Corps de canal (1) selon l'une des revendications précédentes, où la première partie de paroi (34) est fabriquée par moulage sous pression ou moulage par injection et/ou la deuxième partie de paroi (35) est fabriquée par moulage sous pression ou moulage par injection.
